# EUROPEAN PATENT APPLICATION

(11) **EP 3 185 533 A1**
(43) Date of publication of application: **28.06.2017**
(21) Application number: 16205762.4
(22) Date of filing: 21.12.2016
(51) Int. Cl.: H04N 1/48, H01L 27/146

(54) **IMAGE READING APPARATUS AND SEMICONDUCTOR DEVICE**

(30) Priority: 25.12.2015 JP 2015253156
(71) Applicant: Seiko Epson Corporation, Tokyo 160-8801 (JP)
(72) Inventor: SUZUKI, Takafumi, Suwa-shi, Nagano 392-8502 (JP)
(74) Representative: Miller Sturt Kenyon

(57) **Abstract**

An image reading apparatus includes an image reading chip. The image reading chip includes a pixel unit which includes a light receiving element that receives light from the image so as to perform photoelectric conversion, a drive signal line which is for transferring a drive signal for driving the pixel unit, an output signal line which is for transferring an output signal output from the pixel unit, and a control signal line which is for transferring a control signal of which a value is changed for a duration different from a duration when a value of the output signal is changed. The control signal line is provided between the drive signal line and the output signal line.

## Description

### BACKGROUND

### 1. Technical Field

The present invention relates to an image reading apparatus and a semiconductor device.

### 2. Related Art

An image reading apparatus (scanner and the like) using a contact image sensor, and a copying machine, a combination printer, or the like to which a printing function has been added have been developed. As the contact image sensor used in the image reading apparatus, a configuration of using a photodiode provided on a semiconductor substrate is used.

In the contact image sensor used in an image reading apparatus such as a scanner, a pixel unit includes one or a plurality of photodiodes, and multiple pixel units are arranged in one direction. Thus, an output signal line for sequentially transferring output signals from the pixel units and a drive signal line for transferring a drive signal which is used for driving the pixel units are long and run alongside each other. If the output signal line and the drive signal line run alongside, the output signal from the pixel unit is a weak analog signal. However, because the drive signal is required to drive the multiple pixel units, the digital signal is higher than the output voltage from the pixel unit. Thus, the S/N ratio of the weak output signal may be degraded due to crosstalk between the output signal line and the drive signal line, and sensing accuracy may be degraded.

JP-A-2005-217366 discloses a solid-state imaging device in which a multilayer shield line (power line or ground line) is wired between two output signal lines (for outputting a signal from a photoelectric conversion element, which is input to a differential circuit) and is wired on the outside of the two output signal lines, and thus crosstalk between the two output signal lines is reduced.

JP-A-2005-217366 discloses a technique for reducing the crosstalk between the two output signal lines. However, this technique is considered applicable for reducing crosstalk between the output signal line and the drive signal line. However, it is necessary that a dedicated shield line for reducing the crosstalk between the output signal line and the drive signal line is provided, and thus there is a problem in that the size of an image reading chip for reading an image is increased or a layout is restricted by the limited chip size.

### SUMMARY

An advantage of some aspects of the invention is to provide an image reading apparatus in which the size of an image reading chip and the layout restriction due to the limited chip size can be minimized, and crosstalk between an output signal line and a drive signal line can be reduced. Another advantage of some aspects of the invention is to provide a semiconductor device in which the size of a chip and the layout restriction due to the limited chip size are small, and crosstalk between an output signal line and a drive signal line is reduced.

The invention can be realized in the following aspects or application examples. Application Example 1

According to this application example, there is provided an image reading apparatus which includes an image reading chip for reading an image. The image reading chip includes a pixel unit which includes a light receiving element that receives light from the image so as to perform photoelectric conversion, a drive signal line which is for transferring a drive signal for driving the pixel unit, an output signal line which is for transferring an output signal output from the pixel unit, and a control signal line which is for transferring a control signal of which a value is changed for a duration different from a duration when a value of the output signal is changed. The control signal line is provided between the drive signal line and the output signal line.

According to the application example, in the image reading apparatus, in the image reading chip, the control signal line for transferring a control signal is provided between the drive signal line and the output signal line, and thus is also used as a shield line. Thus, it is not necessary that a dedicated shield line is provided. Thus, according to the image reading apparatus of the application example, an occurrence of an increase in the size of the image reading chip or restriction of a layout by the limited chip size can be small, and crosstalk between the output signal line and the drive signal line can be reduced.

### Application Example 2

In the image reading apparatus according to the application example, the control signal may be a signal for initializing charges accumulated in the pixel unit.

A value of the signal for initializing charges accumulated in the pixel unit is changed before a signal is output from the pixel unit, and is not changed in a duration when a value of the output signal from the pixel unit is changed. Thus, according to the image reading apparatus of the application example, the control signal line for transferring the signal for initializing charges accumulated in the pixel unit is also used as the shield line. Accordingly, the occurrence of an increase in the size of the image reading chip or the restriction of a layout by the limited chip size can be small, and crosstalk between the output signal line and the drive signal line can be reduced.

### Application Example 3

In the image reading apparatus according to the application example, the image reading chip may have a form of including a first side and a second side which is longer than the first side. The drive signal line may include a first signal line which is electrically connected to the pixel unit and is provided in a direction along the first side, and a second signal line which is electrically connected to the first signal line and is provided in a direction along the second side. The output signal line may include a third signal line which is electrically connected to the pixel unit and is provided in the direction along the first side, and a fourth signal line which is electrically connected to the third signal line and is provided in the direction along the second side. The control signal line may include a fifth signal line which is electrically connected to the pixel unit and is provided in a direction along the first side, and a sixth signal line which is electrically connected to the fifth signal line and is provided in the direction along the second side. The fifth signal line may be provided between the first signal line and the third signal line. The sixth signal line may be provided between the second signal line and the fourth signal line.

In the image reading apparatus according to the application example, the control signal line which is also used as the shield line is provided between the drive signal line and the output signal line in both of a long-side direction and a short-side direction of the image reading chip. Thus, according to the image reading apparatus of the application example, it is possible to perform shield from an output end of the pixel unit. Accordingly, it is possible to reduce the crosstalk between the output signal line and the drive signal line more.

### Application Example 4

In the image reading apparatus according to the application example, the image reading chip may include a plurality of pixel units which are arranged in a one-dimensional direction. The control signal may be a signal for controlling a resolution of the image read by the image reading chip.

The value of the signal for controlling a resolution of the image read by the image reading chip is changed before signals are output from the plurality of pixel units, and is not changed in a duration when values of output signals from the plurality of pixel units are changed. Thus, according to the image reading apparatus of the application example, the signal for controlling a resolution of the image read by the image reading chip is also used as the shield line. Accordingly, the occurrence of an increase in the size of the image reading chip or the restriction of a layout by the limited chip size can be small, and crosstalk between the output signal line and the drive signal line can be reduced.

### Application Example 5

In the image reading apparatus according to the application example, the control signal line may be provided between the drive signal line and the output signal line in the bottom wiring layer.

Generally, among a plurality of wiring layers, the bottom wiring layer is assumed to be used for forming interconnect of each circuit block or forming wiring for connecting adjacent circuit blocks. Thus, the wiring provided in the bottom wiring layer has no problem even when a resistance value is increased, and thus has a relatively small thickness. Thus, according to the image reading apparatus of the application example, since parasitic capacitance between the output signal line and the control signal line, and parasitic capacitance between the drive signal line and the control signal line can be reduced, it is possible to reduce a load on the output signal line or the drive signal line, and to reduce a delay time of the signal propagated on the output signal line or the drive signal line. Accordingly, it is possible to also improve a reading rate by the image reading chip.

Regarding the bottom wiring layer among the plurality of wiring layers, generally, the minimum width of a wire or the minimum gap between wires, which is defined in the design rule is the smallest. Thus, according to the image reading apparatus of the application example, since a disposition region of the output signal line, the drive signal line, and the control signal line can be reduced, an effect of reducing the layout area of the image reading chip is obtained. Accordingly, it is possible to reduce the size and cost of the image reading chip.

### Application Example 6

In the image reading apparatus according to the application example, the image reading chip may include a drive signal line group formed from a plurality of drive signal lines, and an output signal line group formed from a plurality of output signal lines. The control signal line may be provided between the drive signal line group and the output signal line group.

In the image reading apparatus according to the application example, in the image reading chip, the control signal line for transferring a control signal is provided between the drive signal line group formed from the plurality of drive signal lines, and the output signal line group formed from the plurality of output signal lines. Thus, since the control signal line is also used as the shield line, it is not necessary that a dedicated shield line is provided. Thus, according to the image reading apparatus of the application example, an occurrence of an increase in the size of the image reading chip or restriction of a layout by the limited chip size can be small, and crosstalk between the output signal line and the drive signal line can be reduced.

According to the image reading apparatus of the application example, a drive signal to be transferred to the plurality of pixel units is divided and transferred to the plurality of drive signal lines, and thus it is possible to reduce a load on each of the drive signal lines. Accordingly, it is possible to reduce a time required for an output of the signal from the plurality of pixel units.

According to the image reading apparatus of the application example, the output signal output from the plurality of pixel units is divided and transferred to the plurality of output signal lines, and thus it is possible to reduce a load on each of the output signal lines. Accordingly, it is possible to increase a transfer rate.

### Application Example 7

According to this application example, there is provided a semiconductor device which includes a pixel unit which includes a light receiving element that receives light so as to perform photoelectric conversion, a drive signal line which is for transferring a drive signal for driving the pixel unit, an output signal line which is for transferring an output signal output from the pixel unit, and a control signal line which is for transferring a control signal of which a value is changed for a duration which is different from a duration when a value of the output signal is changed. The control signal line is provided between the drive signal line and the output signal line.

In the semiconductor device according to the application example, the control signal line for transferring a control signal is provided between the drive signal line and the output signal line, and thus is also used as a shield line. Thus, it is not necessary that a dedicated shield line is provided. Accordingly, according to the semiconductor device of the application example, the occurrence of an increase of the size of a chip or the restriction of a layout by the limited chip size can be small, and the crosstalk between an output signal line and a drive signal line can be reduced.

### BRIEF DESCRIPTION OF THE DRAWINGS

Embodiments of the invention will now be described by way of example only with reference to the accompanying drawings, wherein like numbers reference like elements.
Fig. 1 is an external perspective view illustrating a combination machine according to an exemplary embodiment.
Fig. 2 is a perspective view illustrating an internal structure of a scanner unit.
Fig. 3 is an exploded perspective view schematically illustrating a configuration of an image sensor module.
Fig. 4 is a plan view schematically illustrating a disposition of an image reading chip.
Fig. 5 is a diagram illustrating a functional configuration of the scanner unit.
Fig. 6 is a functional block diagram illustrating the image reading chip.
Fig. 7 is a diagram illustrating a configuration of a pixel unit.
Fig. 8 is a timing chart illustrating each signal of the image reading chip.
Fig. 9 is a diagram illustrating a layout configuration of the image reading chip.
Fig. 10 is a sectional view of the image reading chip taken along line X-X in Fig. 9.
Fig. 11 is an enlarged view of a region XI indicated by a broken line in Fig. 9.
Fig. 12 is a functional block diagram illustrating an image reading chip according to Modification Example 1.
Fig. 13 is a timing chart of signals of the image reading chip according to Modification Example 1.
Fig. 14 is a diagram illustrating a layout configuration of the image reading chip according to Modification Example 1.
Fig. 15 is a sectional view of the image reading chip according to Modification Example 1, taken along line XV-XV in Fig. 14.
Fig. 16 is an enlarged view of a region XVI indicated by a broken line in Fig. 14.
Fig. 17 is a functional block diagram illustrating an image reading chip according to Modification Example 2.
Fig. 18 is a timing chart of each signal of the image reading chip according to Modification Example 2.
Fig. 19 is a diagram illustrating a layout configuration of the image reading chip according to Modification Example 2.
Fig. 20 is a sectional view of the image reading chip according to Modification Example 2, taken along line XX-XX in Fig. 19.
Fig. 21 is an enlarged view of a region XXI indicated by a broken line in Fig. 19.

### DESCRIPTION OF EXEMPLARY EMBODIMENTS

Hereinafter, a preferred exemplary embodiment according to the invention will be described in detail with reference to the drawings. The drawings are used to aid in the descriptions. The exemplary embodiment which will be described below does not unreasonably limit the details of aspects of the invention described in the Claims. The necessary components of a configuration of an aspect of the invention are not limited to the components described below and likewise not all of the components described below are essential features of the invention.

Hereinafter, a combination machine (combination device) 1 having an image reading apparatus according to an aspect of the invention will be described in detail with reference to the accompanying drawings.

### 1. Structure of Combination Machine

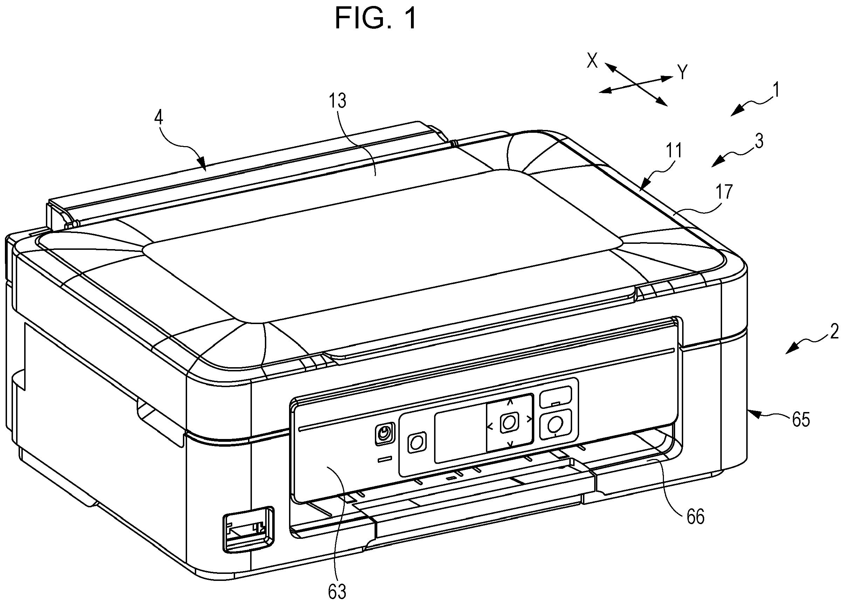

Fig. 1 is an external perspective view illustrating the combination machine 1. As illustrated in Fig. 1, the combination machine 1 integrally includes a printer unit (image recording device) 2 which corresponds to a device main body, and a scanner unit (image reading apparatus) 3. The scanner unit 3 corresponds to an upper unit which is disposed on an upper portion of the printer unit 2. Descriptions will be made on the assumption that a front-rear direction in Fig. 1 is an X axis direction and a crosswise direction is a Y axis direction.

As illustrated in Fig. 1, the printer unit 2 includes a transport unit (not illustrated), a print unit (not illustrated), an operation unit 63, a device frame (not illustrated), and a device housing 65. The transport unit sends a recording medium (printing paper or cutform paper) corresponding to a sheet of paper, along a feeding path. The print unit is disposed over the feeding path and performs ink jet printing on the recording medium. The operation unit 63 has a panel form and is disposed on the front surface. The transport unit, the print unit, and the operation unit 63 are mounted in the device frame. The device housing 65 houses the above components. An exit port 66 is provided on the device housing 65, and the recording medium on which printing is finished exits through the exit port 66. Although not illustrated, a USB port and a power connector are disposed on a lower portion of the rear surface. That is, the configuration of the combination machine 1 enables connection to a computer and the like via the USB port.

The scanner unit 3 is supported so as to be rotatable around the printer unit 2 about a hinge portion 4 on a rear end portion. The scanner unit 3 covers an upper portion of the printer unit 2 so as to be freely opened or closed. That is, the scanner unit 3 is raised in a rotational direction, thereby exposing the upper-surface opening portion of the printer unit 2, and the inside of the printer unit 2 is exposed through the opening portion on the upper-surface opening portion. The scanner unit 3 that is mounted on the printer unit 2 is lowered in a rotational direction, and thus the upper-surface opening portion is closed by the scanner unit 3. In this manner, the scanner unit 3 may be opened, and thus changing an ink cartridge, resolving a paper jam, or the like can be performed.

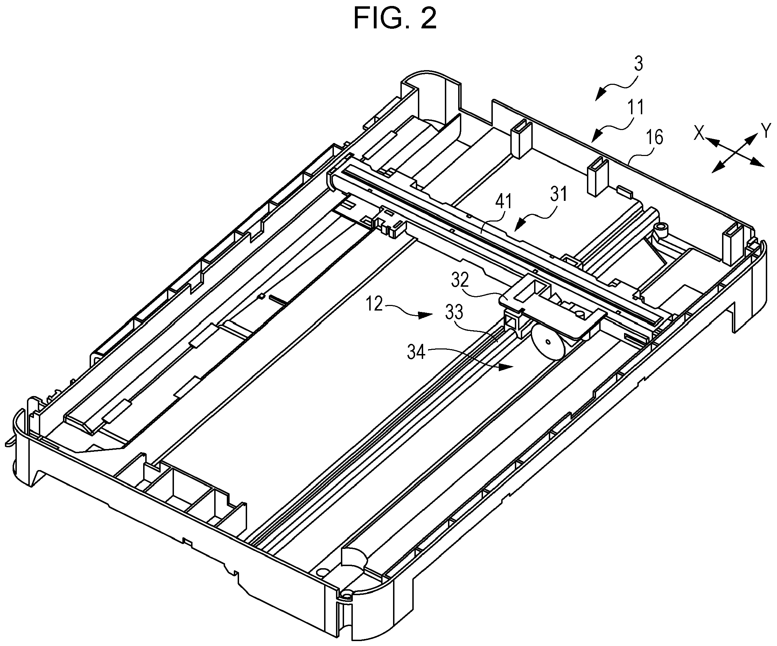

Fig. 2 is a perspective view illustrating an internal structure of the scanner unit 3. As illustrated in Figs. 1 and 2, the scanner unit 3 includes an upper frame 11 which is a housing, an image reading unit 12 accommodated in the upper frame 11, and an upper lid 13 supported by an upper portion of the upper frame 11. The upper lid 13 is supported so as to be rotatable. As illustrated in Fig. 2, the upper frame 11 includes a box-type lower case 16 which accommodates the image reading unit 12, and an upper case 17 which covers the top surface of the lower case 16. A document mounting panel (document stand; not illustrated) of glass is disposed substantially across the upper case 17. A read medium (original document) of which a surface to be read is positioned face down is mounted on this document mounting panel. The lower case 16 is formed so as to have a shallow box shape of which an upper surface is opened.

As illustrated in Fig. 2, the image reading unit 12 includes a sensor unit 31 of a line sensor type, a sensor carriage 32 in which the sensor unit 31 is mounted, a guide shaft 33 extending in the Y-axis direction that slidably supports the sensor carriage 32, and a self-traveling sensor moving mechanism 34 which moves the sensor carriage 32 along the guide shaft 33. The sensor unit 31 includes an image sensor module 41 which is a complementary metal-oxide-semiconductor (CMOS) line sensor extending in the X-axis direction. The sensor moving mechanism 34 is driven in the Y-axis direction by a motor, and thus the sensor unit 31 performs reciprocation along the guide shaft 33. Thus, an image of the read medium (original document) on the document mounting panel is read. The sensor unit 31 may be a charge coupled device (CCD) line sensor.

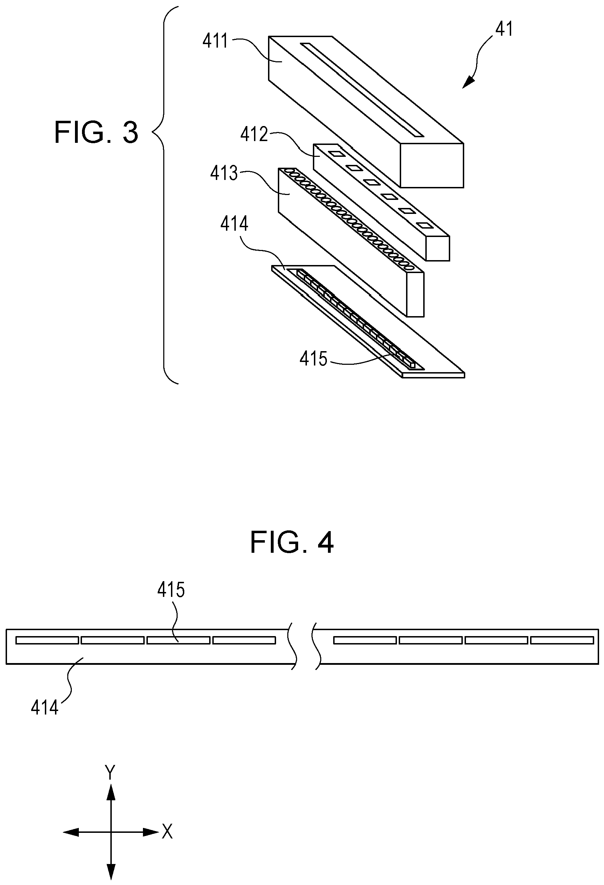

Fig. 3 is an exploded perspective view schematically illustrating a configuration of the image sensor module 41. In the example illustrated in Fig. 3, the image sensor module 41 includes a case 411, a light source 412, a lens 413, a module substrate 414, and an image reading chip (semiconductor device) 415 for reading an image. The light source 412, the lens 413, and the image reading chip 415 are accommodated between the case 411 and the module substrate 414. A slit is provided in the case 411. The light source 412 includes, for example, R, G, and B light emitting diodes (LEDs). The R, G, and B light emitting diodes (red LED, green LED, and blue LED) sequentially emit light while being rapidly switched. Light emitted by the light source 412 is applied to a read medium through the slit, and light from the read medium is input to the lens 413 through the slit. The lens 413 guides the input light to the image reading chip 415.

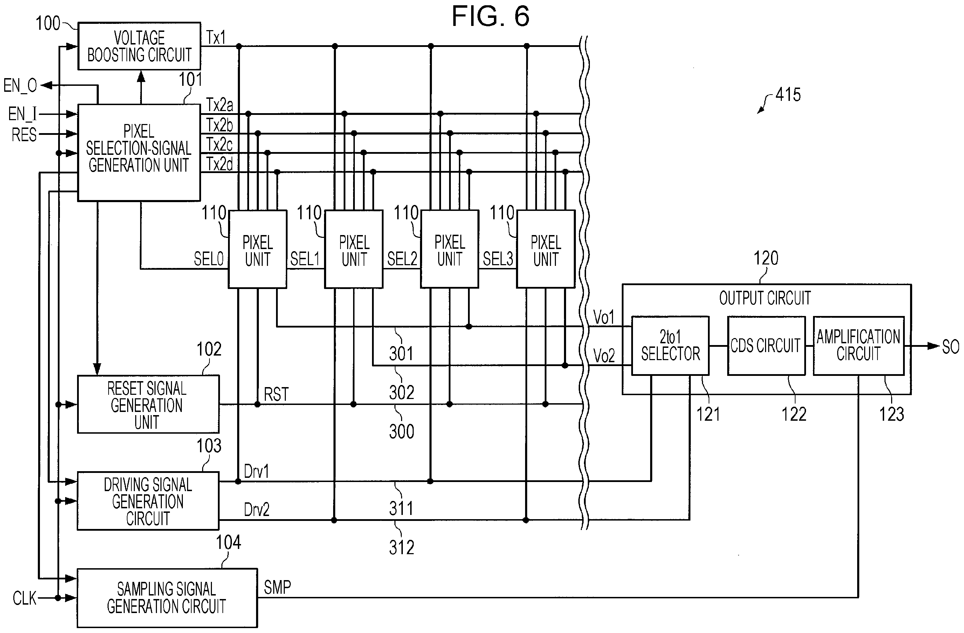

Fig. 4 is a schematic plan view illustrating an arrangement of the image reading chip 415. As illustrated in Fig. 4, a plurality (m pieces) of image reading chips 415 are arranged on the module substrate 414 in parallel in a one-dimensional direction (X-axis direction in Fig. 4). Each of the image reading chips 415 includes multiple light receiving elements linearly disposed (see Figs. 6, 7, and 9). As the density of the light receiving elements provided in each of the image reading chip 415 increases, a scanner unit (image reading apparatus) 3 having a high resolution for reading an image can be realized. As the number of the image reading chips 415 increases, a scanner unit (image reading apparatus) 3 capable of also reading large images can be realized.

### 2. Functional Configuration of Scanner Unit (Image Reading Apparatus)

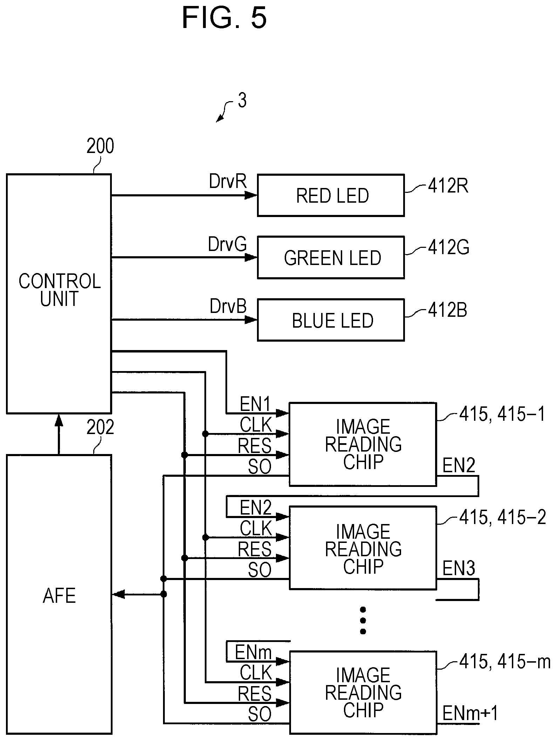

Fig. 5 is a functional block diagram illustrating a functional configuration of the scanner unit (image reading apparatus) 3. In the example illustrated in Fig. 5, the scanner unit (image reading apparatus) 3 includes a control unit 200, an analog front end (AFE) 202, a red LED 412R, a green LED 412G, a blue LED 412B, and m pieces of image reading chips 415 (415-1 to 415-m). As described above, the red LED 412R, the green LED 412G, and the blue LED 412B constitute the light source 412. The plurality of image reading chips 415 are disposed on the module substrate 414 in parallel. A plurality of red LEDs 412R, a plurality of green LEDs 412G, and a plurality of blue LEDs 412B may be provided. The control unit 200 and the analog front end (AFE) 202 are provided on the module substrate 414 or on a substrate (not illustrated) which is different from the module substrate 414. Each of the control unit 200 and the analog front end (AFE) 202 may be realized by an integrated circuit (IC).

The control unit 200 sends a drive signal DrvR to the red LED 412R according to a predetermined cycle T and a predetermined exposure time Δt and thereby causes the red LED 412R to emit light. Similarly, the control unit 200 sends a drive signal DrvG to the green LED 412G according to the cycle T and the exposure time Δt and thereby causes the green LED 412G to emit light. The control unit 200 sends a drive signal DrvB to the blue LED 412B according to the cycle T and the exposure time Δt and thereby causes the blue LED 412B to emit light. The control unit 200 causes the red LED 412R, the green LED 412G, and the blue LED 412B to exclusively emit light one by one in this order for duration of cycle T.

The control unit 200 commonly sends a clock signal CLK and a resolution setting signal RES to m pieces of the image reading chips 415 (415-1 to 415-m). The clock signal CLK is an operation clock signal for the image reading chip 415. The resolution setting signal RES is a signal for setting the resolution at which the scanner unit (image reading apparatus) 3 reads an image. The resolution is set in accordance with the number of rising edges of the clock signal CLK for the duration when the resolution setting signal RES is active (high level in the exemplary embodiment). In the exemplary embodiment, when the number of rising edges of the clock signal CLK for the duration when the resolution setting signal RES is active (high level) is 2, 4, and 8, a resolution of 300 dpi, 600 dpi, and 1200 dpi is respectively set.

Each of the image reading chips 415-j (j=1 to m) receives light from an image which is formed on the read medium by each of the light receiving elements. Then, each of the image reading chips 415-j (j=1 to m) performs synchronization with the clock signal CLK for the duration when a chip enable signal ENj is active (high level in the exemplary embodiment) and generates an image signal SO based on light received by each of the light receiving elements. The image signal SO contains image information of a resolution set in accordance with the resolution setting signal RES. The image reading chips 415-j (j=1 to m) output the generated image signal SO. In the exemplary embodiment, the control unit 200 causes the red LED 412R, the green LED 412G, or the blue LED 412B to emit light. Then, the control unit 200 generates a chip enable signal EN1 which is set to be active (high level) for a predetermined period (period until the image reading chip 415-1 ends an output of the image signal SO). The control unit 200 sends the generated chip enable signal EN1 to the image reading chip 415-1. The image reading chip 415-j (j=1 to m) ends the output of the image signal SO and then generates a chip enable signal ENj+1 which is set to be active (high level) for a predetermined period (period until the image reading chip 415-j+1 ends an output of the image signal SO). The image reading chip 415-j (j=1 to m) sends the generated chip enable signal ENj+1 to the image reading chip 415-j+1. Thus, after the red LED 412R, the green LED 412G, or the blue LED 412B emits light, m pieces of the image reading chips 415 (415-1 to 415-m) sequentially output image signals SO. A circuit configuration and an operation of the image reading chip 415 will be described later in detail.

The analog front end (AFE) 202 reads the image signals SO which are sequentially output by m pieces of the image reading chips 415 (415-1 to 415-m) and performs amplification or A/D conversion on each of the image signals SO. The analog front end (AFE) 202 converts each of the image signals SO into a digital signal which has a digital value depending on the intensity of the received light of each of the light receiving elements. The analog front end (AFE) 202 sequentially transmits digital signals to the control unit 200.

The control unit 200 receives the digital signals which are sequentially transmitted from the analog front end (AFE) 202 and generates image information which has been read by the image sensor module 41.

### 3. Configuration and Operation of Image Reading Chip

Fig. 6 is a functional block diagram illustrating the image reading chip 415. The image reading chip 415 illustrated in Fig. 6 includes a voltage boosting circuit 100, a pixel selection-signal generation unit 101, a reset signal generation unit 102, a drive signal generation circuit 103, a sampling signal generation circuit 104, n pieces of pixel units 110, and an output circuit 120.

The pixel selection-signal generation unit 101 performs sampling on the resolution setting signal RES at a timing when the clock signal CLK rises. In a case where the resolution setting signal RES subjected to sampling has a high level, the pixel selection-signal generation unit 101 counts the number of times of continuously performing sampling on the resolution setting signal RES having a high level. If the count value is 2, the pixel selection-signal generation unit 101 stores bit data indicating a resolution of 300 dpi in a resolution setting register (not illustrated). If the count value is 4, the pixel selection-signal generation unit 101 stores bit data indicating a resolution of 600 dpi in the resolution setting register. If the count value is 8, the pixel selection-signal generation unit 101 stores bit data indicating a resolution of 1200 dpi in the resolution setting register.

If a chip enable signal EN_I is changed from a low level to a high level, the pixel selection-signal generation unit 101 outputs a control signal to the voltage boosting circuit 100 at a predetermined timing.

After outputting the control signal to the voltage boosting circuit 100, the pixel selection-signal generation unit 101 generates, at a predetermined timing, a pixel selection signal SEL0 which is set to be active (high level in the exemplary embodiment) for a predetermined period, based on the clock signal CLK. The pixel selection-signal generation unit 101 outputs the generated pixel selection signal SEL0 to the first pixel unit 110. After outputting the pixel selection signal SEL0, the pixel selection-signal generation unit 101 generates, at a predetermined timing, a second transfer control signal T×2 based on the bit data which has been stored in the resolution setting register. In the exemplary embodiment, the second transfer control signal T×2 includes four signals T×2a, T×2b, T×2c, and T×2d, and among the four signals, a signal which becomes active (high level in the exemplary embodiment) is changed in accordance with the bit data which has been stored in the resolution setting register. Specifically, when the bit data indicates a resolution of 1200 dpi, in the second transfer control signal T×2, only the signal T×2a becomes active (high level) on the first cycle of the clock signal CLK, and only the T×2b becomes active (high level) on the next one cycle of the clock signal CLK. In addition, only the signal T×2c becomes active (high level) on the further next one cycle of the clock signal CLK, and only the Tx2d becomes active (high level) on furthermore the next one cycle of the clock signal CLK. When the bit data indicates a resolution of 600 dpi, in the second transfer control signal T×2, only the two signals T×2a and T×2b simultaneously become active (high level) on the first cycle of the clock signal CLK, and only the two signals T×2c and T×2d simultaneously become active (high level) on the next one cycle. When the bit data indicates a resolution of 300 dpi, in the second transfer control signal T×2, the four signals T×2a, T×2b, T×2c, and T×2d simultaneously become active (high level) on one cycle of the clock signal CLK.

After outputting the pixel selection signal SEL0, the pixel selection-signal generation unit 101 outputs the control signal to the reset signal generation unit 102, the drive signal generation circuit 103, and the sampling signal generation circuit 104 at a predetermined timing.

The voltage boosting circuit 100 boosts a power source voltage supplied from a power source terminal (not illustrated) of the image reading chip 415, based on the control signal from the pixel selection-signal generation unit 101. The voltage boosting circuit 100 generates a first transfer control signal Tx1 in which the boosted power source voltage is set to a high level. The first transfer control signal Tx1 is a control signal for transferring charges which have been accumulated in the light receiving element for the exposure time Δt. The first transfer control signal Tx1 is commonly supplied to n pieces of the pixel units 110.

The reset signal generation unit 102 generates a reset signal RST based on the control signal from the pixel selection-signal generation unit 101. The reset signal RST is a control signal for initializing the charges which are accumulated in n pieces of the pixel units 110. In the exemplary embodiment, the reset signal RST is commonly supplied to n pieces of the pixel units 110. Thus, the image reading chip 415 includes a control signal line 300 for transferring the reset signal RST to n pieces of the pixel units 110.

The drive signal generation circuit 103 generates drive signals Drv1 and Drv2 for driving n pieces of the pixel units 110, based on the control signal from the pixel selection-signal generation unit 101. The two drive signals Drv1 and Drv2 exclusively become active (high level in the exemplary embodiment), and one of the two drive signals Drv1 and Drv2 is supplied to each of n pieces of the pixel units 110. When the drive signal Drv1 or the drive signal Drv2 which is supplied to the pixel unit 110 is active (high level) and a pixel selection signal SELi-1 is active (high level), the i-th (i is a value of 1 to n) pixel unit 110 sets a pixel selection signal SELi to be active (high level) and outputs an output signal (pixel signal). The pixel selection signal SELi is output to the (i+1)th pixel unit 110.

In the exemplary embodiment, n pieces of the pixel units 110 are arranged in the one-dimensional direction. The drive signal Drv1 is supplied to an odd-numbered pixel unit 110 from an end of n pieces of the pixel units 110. The drive signal Drv2 is supplied to an even-numbered pixel unit 110. Thus, the image reading chip 415 has a drive signal line group formed from a plurality of drive signal lines 311 and 312. The drive signal line 311 is used for transferring the drive signal Drv1 to the odd-numbered pixel unit 110, and the drive signal line 312 is used for transferring the drive signal Drv2 to the even-numbered pixel unit 110. As described above, the drive signal supplied to n pieces of the pixel units 110 is distributed and transferred to the drive signal lines 311 and 312, and thus it is possible to reduce a load on the drive signal lines 311 and 312. Accordingly, it is possible to reduce a time required for an output of the pixel signal from the pixel units 110.

Each of n pieces of the pixel units 110 includes a light receiving element which receives light from an image formed on a read medium, and performs photoelectric conversion. The light receiving element outputs a pixel signal of a voltage depending on light received for the exposure time Δt, based on the first transfer control signal Tx1, the second transfer control signal T×2, the pixel selection signal SEL (any of SEL0 to SELn-1), the reset signal RST, and the drive signal (drive signal Drv1 or drive signal Drv2). All of n pieces of the pixel units 110 have the same configuration. A specific circuit configuration and a specific operation will be described later.

Output signal (pixel signals) output from n pieces of the pixel units 110 are sequentially transferred to the output circuit 120. In the exemplary embodiment, the image reading chip 415 has an output signal line group. The output signal line group is formed from a plurality of output signal lines 301 and 302 for transferring the output signals (pixel signals) output from n pieces of the pixel units 110, to the output circuit 120. The output signal line 301 is used for sequentially transferring output signals (pixel signals) from the odd-numbered pixel units 110 to the output circuit 120, and the output signal line 302 is used for sequentially transferring output signals (pixel signals) from the even-numbered pixel units 110 to the output circuit 120. As described above, the output signals (pixel signals) from n pieces of the pixel units 110 are distributed to the output signal lines 301 and 302, and are sequentially transferred, and thus it is possible to reduce a load of each of the output signal lines 301 and 302. Accordingly, it is possible to increase a transfer rate.

The output circuit 120 performs predetermined signal processing on the pixel signal output from each of n pieces of the pixel units 110, so as to generate and output an image signal SO. In the exemplary embodiment, the output circuit 120 includes a 2to1 selector 121, a CDS circuit 122, and an amplification circuit 123.

An image signal Vo1 is supplied to the 2to1 selector 121 through the output signal line 301. The image signal Vo1 includes the pixel signals output from the odd-numbered pixel units 110, in sequence. An image signal Vo2 is supplied to the 2to1 selector 121 through the output signal line 302. The image signal Vo2 includes the pixel signals output from the even-numbered pixel units 110, in sequence. The drive signals Drv1 and Drv2 are also supplied to the 2to1 selector 121. Thus, when the drive signal Drv1 is active (high level), the 2to1 selector 121 selects and outputs the image signal Vo1. When the drive signal Drv2 is active (high level), the 2to1 selector 121 selects and outputs the image signal Vo2.

An output signal (image signal Vo1 or image signal Vo2) of the 2to1 selector 121 is input to the correlated double sampling (CDS) circuit 122. Noise which occurs by characteristic variation of an amplification transistor provided in each of n pieces of the pixel units 110 and is superimposed on the image signals Vo1 and Vo2 is removed by correlated double sampling. That is, the CDS circuit 122 is a noise reduction circuit in which noise included in the output signal (pixel signal) output from each of n pieces of the pixel units 110 is reduced.

The amplification circuit 123 performs sampling on a signal having noise removed by the CDS circuit 122, based on a sampling signal SMP. The amplification circuit 123 amplifies the signal subjected to sampling, so as to generate an image signal SO. As described above, the image signal SO is output from the image reading chip 415 and is supplied to the analog front end (AFE) 202 (see Fig. 5).

The sampling signal generation circuit 104 generates the sampling signal SMP based on the control signal from the pixel selection-signal generation unit 101, and supplies the generated sampling signal SMP to the amplification circuit 123.

If the chip enable signal EN_I is changed from a high level to a low level, the pixel selection-signal generation unit 101 suspends an output of the image signal SO to the output circuit 120, and thus causes the output terminal to have high impedance. The pixel selection-signal generation unit 101 generates a chip enable signal EN_O (any of chip enable signals EN2 to ENm+1 in Fig. 5) which is set to be active (high level) for a predetermined period, and outputs the generated chip enable signal EN_O to the image reading chip 415 at the next stage, through the output terminal OP2.

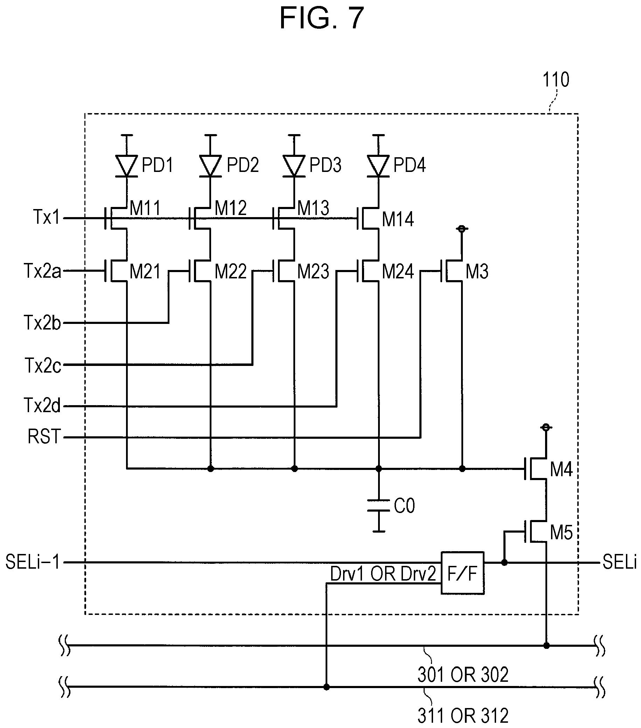

Fig. 7 is a diagram illustrating a configuration of the pixel unit 110 (i-th pixel unit 110). As illustrated in Fig. 7, the pixel unit 110 includes four light receiving elements PD1, PD2, PD3, and PD4. That is, the pixel unit 110 includes four pixels.

The light receiving elements PD1, PD2, PD3, and PD4 each receive light (in the exemplary embodiment, light from an image formed on a read medium), and convert (photoelectrically-converts) the received light into an electric signal. In the exemplary embodiment, each of the light receiving elements PD1, PD2, PD3, and PD4 is configured by a photodiode, and has a grounded anode. A cathode of the light receiving element PD1 is connected to a source of an NMOS transistor M11, and a cathode of the light receiving element PD2 is connected to a source of an NMOS transistor M12. A cathode of the light receiving element PD3 is connected to a source of an NMOS transistor M13, and a cathode of the light receiving element PD4 is connected to a source of an NMOS transistor M14.

A drain of the NMOS transistor M11 is connected to a source of an NMOS transistor M21, and a drain of the NMOS transistor M12 is connected to a source of an NMOS transistor M22. A drain of the NMOS transistor M13 is connected to a source of an NMOS transistor M23, and a drain of the NMOS transistor M14 is connected to a source of an NMOS transistor M24. The first transfer control signal Tx1 is supplied to a gate of each of the four NMOS transistors M11, M12, M13, and M14.

A drain of each of the four NMOS transistors M21, M22, M23, and M24 is commonly connected to the source of the NMOS transistor M3, the gate of the NMOS transistor M4, and one end of a capacitor having capacitance C0. Another end of the capacitor having capacitance C0 is grounded. The signal T×2a is supplied to the gate of the NMOS transistor M21, and the signal T×2b is supplied to the gate of the NMOS transistor M22. The signal T×2c is supplied to the gate of the NMOS transistor M23, and the signal T×2d is supplied to the gate of the NMOS transistor M24.

The power source voltage is supplied to the drain of the NMOS transistor M3, and the reset signal RST is supplied to the gate of the NMOS transistor M3.

The power source voltage is supplied to the drain of the NMOS transistor M4, and the source of the NMOS transistor M4 is connected to the drain of the NMOS transistor M5.

The source of the NMOS transistor M5 is connected to the output signal line 301 or the output signal line 302. An output signal (pixel selection signal SELi) of a flip-flop (F/F) is supplied to the gate of the NMOS transistor M5.

The pixel selection signal SELi-1 and either of the drive signal Drv1 and the drive signal Drv2 are input to the flip-flop (F/F). The flip-flop (F/F) captures the pixel selection signal SELi-1 at a rising edge of the input drive signal Drv1 or the drive signal Drv2, and outputs the delayed pixel selection signal SELi. The pixel selection signal SELi passes through a delay circuit (not illustrated), and thus functions as an asynchronous reset signal of the flip-flop (F/F). Thus, the pixel selection signal SELi becomes active (high level), and then becomes inactive (low level) after a predetermined period elapses.

The i-th pixel unit 110 which has the above-described configuration operates as follows. Firstly, all of the first transfer control signal Tx1, the second transfer control signals T×2 (T×2a, T×2b, T×2c, and T×2d), the pixel selection signal SELi-1, the drive signals Drv1 and Drv2 are inactive (low level) for the exposure time Δt. The light receiving elements PD1, PD2, PD3, and PD4 accumulate charges (negative charges) in accordance with received light.

Then, only the first transfer control signal Tx1 becomes active (high level), and all of the four NMOS transistors M11, M12, M13, and M14 turn ON. Thus, charges (negative charges) accumulated in the light receiving element PD1 are transferred to intermediate accumulation capacitance C1 (not illustrated) which is formed at a connection node of the drain of the NMOS transistor M11 and the source of the NMOS transistor M21. Charges (negative charges) accumulated in the light receiving element PD2 are transferred to intermediate accumulation capacitance C2 (not illustrated) which is formed at a connection node of the drain of the NMOS transistor M12 and the source of the NMOS transistor M22. Charges (negative charges) accumulated in the light receiving element PD3 are transferred to intermediate accumulation capacitance C3 (not illustrated) which is formed at a connection node of the drain of the NMOS transistor M13 and the source of the NMOS transistor M23. Charges (negative charges) accumulated in the light receiving element PD4 are transferred to intermediate accumulation capacitance C4 (not illustrated) which is formed at a connection node of the drain of the NMOS transistor M14 and the source of the NMOS transistor M24.

Then, the first transfer control signal Tx1 becomes inactive (low level). The drive signal Drv1 or the drive signal Drv2 which is supplied to the pixel unit 110 repeats activeness (high level) and inactiveness (low level) on a predetermined cycle of the clock signal CLK. Specifically, when the resolution is set to 1200 dpi, the drive signal Drv1 or the drive signal Drv2 becomes active (high level) for four cycles of the clock signal CLK, and becomes inactive (low level) for the next four cycles of the clock signal CLK. The drive signal Drv1 or the drive signal Drv2 repeats a state as described above. When the resolution is set to 600 dpi, the drive signal Drv1 or the drive signal Drv2 becomes active (high level) for two cycles of the clock signal CLK, and becomes inactive (low level) for the next two cycles of the clock signal CLK. The drive signal Drv1 or the drive signal Drv2 repeats a state as described above. When the resolution is set to 300 dpi, the drive signal Drv1 or the drive signal Drv2 becomes active (high level) for one cycle of the clock signal CLK, and becomes inactive (low level) for the next one cycle of the clock signal CLK. The drive signal Drv1 or the drive signal Drv2 repeats a state as described above.

The reset signal RST becomes active (high level) for a predetermined period, for each cycle of the clock signal CLK. Thus, the NMOS transistor M3 turns ON and the capacitance C0 is initialized. Then, a predetermined amount of charges (positive charges) are accumulated in the capacitor for the capacitance C0. After the reset signal RST returns to being inactive (low level), at least one of the four signals T×2a, T×2b, T×2c, and T×2d constituting the second transfer control signal T×2 becomes active (high level) for a predetermined period, for each cycle of the clock signal CLK.

Specifically, when the resolution is set to be 1200 dpi, firstly, only the signal T×2a becomes active (high level) for a predetermined period, in one cycle of the clock signal CLK. Then, only the signal T×2b becomes active (high level) for a predetermined period, in one cycle of the clock signal CLK. Then, only the signal Tx2c becomes active (high level) for a predetermined period, in one cycle of the clock signal CLK. Then, only the signal Tx2d becomes active (high level) for a predetermined period, in one cycle of the clock signal CLK. The four signals T×2a, T×2b, T×2c, and T×2d repeat the state as described above.

When the resolution is set to be 600 dpi, firstly, only the two signals T×2a and T×2b become active (high level) for a predetermined period, in one cycle of the clock signal CLK. Then, only the two signals T×2c and T×2d become active (high level) for a predetermined period, in one cycle of the clock signal CLK.

When the resolution is set to be 300 dpi, all four signals T×2a, T×2b, T×2c, and T×2d become active (high level) for a predetermined period, in one cycle of the clock signal CLK. The four signals T×2a, T×2b, T×2c, and Tx2d repeat the state as described above.

If at least one of the four signals T×2a, T×2b, T×2c, and T×2d becomes active (high level) for the predetermined period, at least one of the four NMOS transistors M21, M22, M23, and M24 turns ON, and the predetermined amount of charges (positive charges) accumulated in the capacitor of capacitance C0 are reduced by charges (negative charges) accumulated in at least one of pieces of the intermediate accumulation capacitance C1, C2, C3, and C4.

In the pixel unit 110 which is to read a pixel signal, the pixel selection signal SELi-1 becomes active (high level) for a predetermined period in a duration when the drive signal Drv1 or the drive signal Drv2 to be supplied is active (high level). After the reset signal RST returns to being inactive (low level), the pixel selection signal SELi becomes active (high level) for a predetermined period.

Thus, the NMOS transistor M5 turns ON, and a current flowing in the NMOS transistor M4 is changed depending on the charges accumulated in the capacitor of the capacitance C0. Thus, a source potential of the NMOS transistor M4 is changed, and a pixel signal of a voltage depending on the source potential of the NMOS transistor M4 is output from the pixel unit 110 to the output signal line 301 or the output signal line 302.

In the pixel unit 110 which is not to read the pixel signal, the pixel selection signal SELi-1 maintains being inactive (low level). Thus, the pixel selection signal SELi also has a low level. Thus, the NMOS transistor M5 turns OFF, and the pixel signal is not output from the pixel unit 110.

An output of the voltage boosting circuit 100 is used as gate signals of the four NMOS transistor M11, M12, M13, and M14, in order to transfer charges with high efficiency for a short time. However, in a case where any problem does not occur in transfer efficiency and accuracy, the four NMOS transistor M11, M12, M13, and M14 may be driven by using the power source voltage. In this case, the voltage boosting circuit 100 is not required.

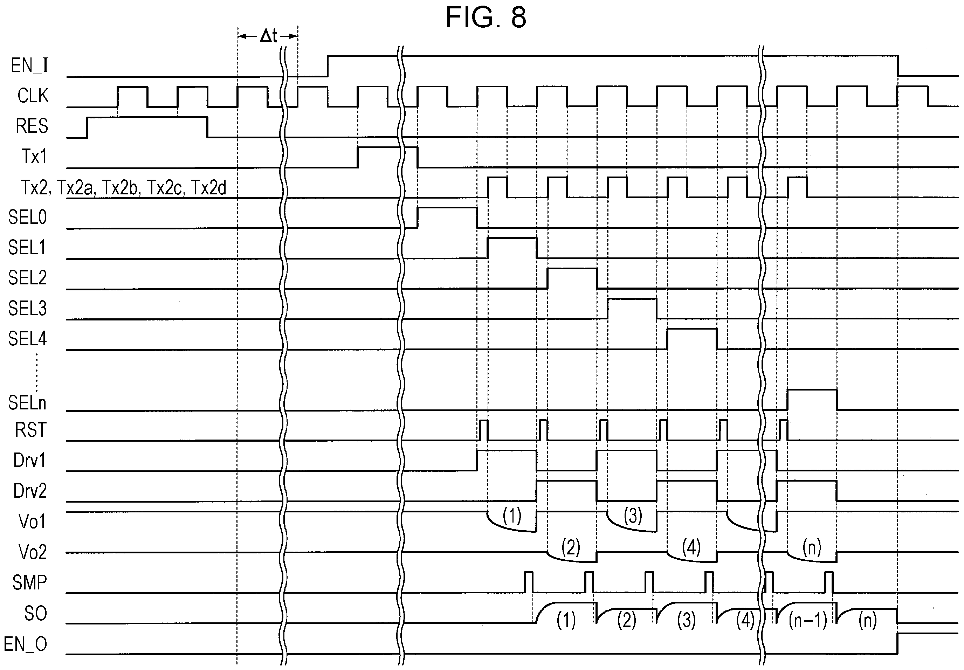

Fig. 8 is a timing chart of each signal of the image reading chip 415. Fig. 8 is a timing chart in a case where a resolution at which the scanner unit (image reading apparatus) 3 reads an image is set to 300 dpi.

As illustrated in Fig. 8, firstly, the resolution setting signal RES has a high level for two cycles of the clock signal CLK. If the exposure time Δt elapses, the chip enable signal EN_I becomes active (high level) for a predetermined period, and then various signals at 300 dpi are supplied to each of the pixel units 110.

After the chip enable signal EN_I becomes active (high level), firstly, the first transfer control signal Tx1 becomes active (high level) for one cycle of the clock signal CLK.

Then, the pixel selection signal SEL0 becomes active (high level) for one cycle of the clock signal CLK.

Then, for one cycle of the clock signal CLK, the drive signal Drv1 becomes active (high level), and the first transfer control signal Tx1 and the pixel selection signal SEL0 become inactive (low level) together. The reset signal RST which is delayed a little becomes active (high level) for a short time.

Then, after the reset signal RST returns to being inactive (low level), all of the four signals T×2a, T×2b, T×2c, and T×2d constituting the second transfer control signal Tx2 become active (high level) until the clock signal CLK falls for the next time. The pixel selection signal SEL1 becomes active (high level). Thus, a pixel signal from the first pixel unit 110 is output to the output signal line 301, and the image signal Vo1 has a voltage depending on this pixel signal. The image signal Vo1 is subjected to signal processing in the output circuit 120. The image signal SO has a voltage corresponding to the first pixel signal, with synchronization with falling of the sampling signal SMP.

Then, for one cycle of the clock signal CLK, the drive signal Drv2 becomes active (high level), and the pixel selection signal SEL1 and the drive signal Drv1 become inactive (low level) together. The reset signal RST which is delayed a little becomes active (high level) for a short time.

Then, after the reset signal RST returns to being inactive (low level), all of the four signals T×2a, T×2b, T×2c, and Tx2d become active (high level) until the clock signal CLK falls for the next time. The pixel selection signal SEL2 becomes active (high level). Thus, a pixel signal from the second pixel unit 110 is output to the output signal line 302, and the image signal Vo2 has a voltage depending on this pixel signal. The image signal Vo2 is subjected to signal processing in the output circuit 120. The image signal SO has a voltage corresponding to the second pixel signal, with synchronization with falling of the sampling signal SMP.

Then, for one cycle of the clock signal CLK, the drive signal Drv1 becomes active (high level), and the pixel selection signal SEL2 and the drive signal Drv2 become inactive (low level) together.

In the following descriptions, similarly, the image signal SO has a voltage depending on pixel signals of the third to n-th pixel units, with synchronization with falling of the sampling signal SMP.

After that, the chip enable signal EN_I is changed from being active (high level) to being inactive (low level), and the output terminal for the image signal SO has high impedance. The chip enable signal EN_O becomes active (high level) for a predetermined period.

### 4. Layout Configuration of Image Reading Chip

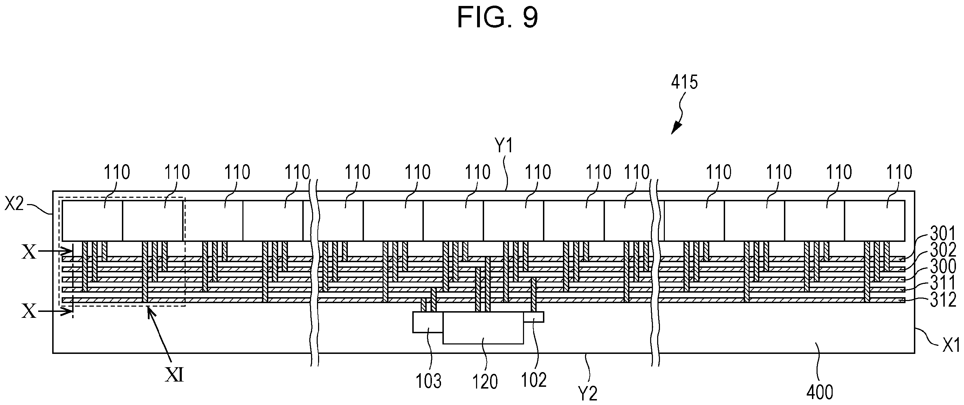

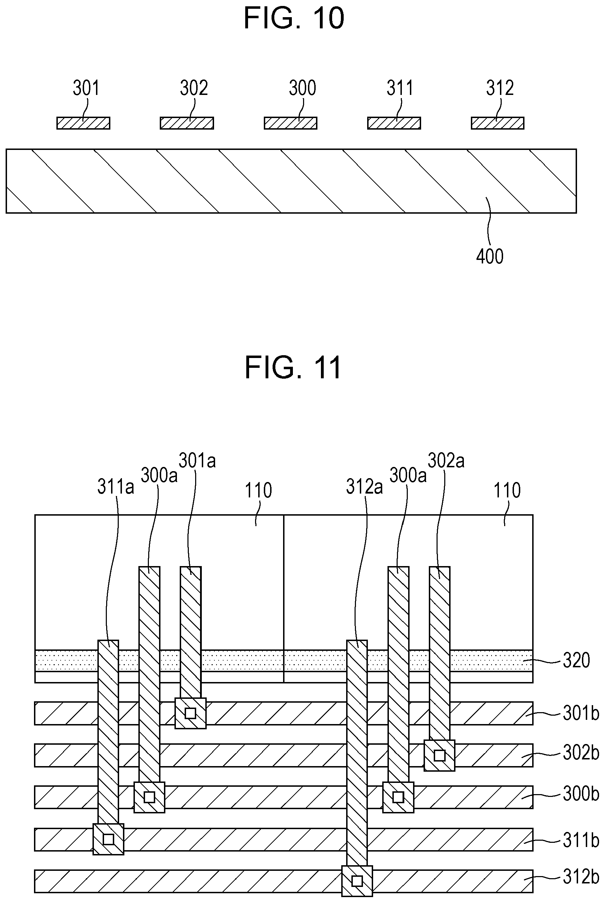

Fig. 9 is a diagram illustrating a layout configuration of the image reading chip 415. Fig. 9 illustrates a layout configuration when a semiconductor substrate 400 of the image reading chip 415 is viewed in plan. Fig. 9 illustrates only some of circuit blocks or signal lines constituting the image reading chip 415. Fig. 10 is a sectional view of the image reading chip 415 taken along line X-X in Fig. 9. Fig. 11 is an enlarged view of a region XI indicated by a broken line in Fig. 9.

As illustrated in Fig. 9, the image reading chip 415 has a shape including a first side X1 and a second side Y1 which is longer than the first side X1. For example, in the image reading chip 415, the first side X1 has the same length as a side X2 which faces the first side X1, the second side Y1 has the same length as a side Y2 which faces the second side Y1, and the first side X1 is perpendicular to the second side Y1. That is, the image reading chip 415 may have a rectangular shape.

In the exemplary embodiment, the image sensor module 41 is a line sensor. Thus, as illustrated in Fig. 9, in the image reading chip 415, a plurality (m pieces) of pixel units 110 is arranged in one-dimensional direction along the second side Y1. Since m pieces of the pixel units 110 are disposed in parallel in the one-dimensional direction, as illustrated in Fig. 9, the output signal lines 301 and 302 for sequentially transferring output signals (pixel signals) from the pixel units 110, and the drive signal lines 311 and 312 for transferring the drive signals Drv1 and Drv2 for driving the pixel units 110 are commonly long and run in parallel. In Fig. 9, the output signal line 301, the output signal line 302, the drive signal line 311, and the drive signal line 312 are disposed in an order from being close to m pieces of pixel units 110, so as to run in parallel.

The output signal (pixel signal) from the pixel unit 110 is a weak analog signal.
However, the drive signals Drv1 and Drv2 are digital signals higher than the output voltage from the pixel unit 110, because of a need for driving the plurality of pixel units 110. Thus, S/N of the weak output signal (pixel signal) is deteriorated due to crosstalk between the output signal lines 301 and 302, and the drive signal lines 311 and 312, and thus a situation in which accuracy of sensing (image reading) by the image reading chip 415 is easily deteriorated occurs. On the contrary, in order to reduce crosstalk between the output signal lines 301 and 302, and the drive signal lines 311 and 312, it is also considered that a dedicated shield line is provided between the output signal line 302 and the drive signal line 311. However, in this case, a problem in that the size of the image reading chip 415 is increased or a layout in the limited chip size is restricted may occur.

Thus, in the exemplary embodiment, instead of providing a dedicated shield line, a control signal line 300 for transferring the reset signal RST is provided between the output signal line 302 and the drive signal line 311, that is, between the drive signal line group formed from the drive signal lines 311 and 312, and the output signal line group formed from the output signal lines 301 and 302, as illustrated in Fig. 9. As illustrated in Fig. 8, the value (voltage) of the reset signal RST is changed in a duration different from a duration when the value (voltage) of the output signal (pixel signal) from the pixel unit 110 is changed. In other words, the reset signal RST is changed from a low level to a high level, and then is changed from a high level to a low level in the duration different from the duration when the value (voltage) of the output signal (pixel signal) from the pixel unit 110 is changed. However, the reset signal RST is not changed, and maintains a low level in a duration when the value (voltage) of the output signal (pixel signal) from the pixel unit 110 is changed. As described above, the control signal line 300 for transferring the reset signal RST has a function similar to the ground line in the duration when the value (voltage) of the output signal (pixel signal) from the pixel unit 110 is changed. Thus, the control signal line 300 may be also used as a shield line.

As illustrated in Fig. 10, in the exemplary embodiment, all of the output signal lines 301 and 302, and the drive signal lines 311 and 312 which run in parallel in the direction along the second side Y1 are provided in the same wiring layer. The control signal line 300 which runs in parallel to these signal lines is also provided in the same wiring layer. Thus, a shield effect is improved by the control signal line 300.

Generally, among a plurality of wiring layers (for example, the first to fifth wiring layers), the bottom wiring layer (wiring layer closest to the semiconductor substrate) or wiring layers (for example, the first to third wiring layers) close to the bottom wiring layer are assumed to be used when internal wiring of each circuit block or wiring for connecting adjacent circuit blocks is formed. The top wiring layer or wiring layers (for example, the fourth and fifth wiring layers) close to the top wiring layer are assumed to be used when wiring for connecting a plurality of circuit blocks is formed. Thus, wiring provided in the top wiring layer or a wiring layer closed to the top wiring layer has a relatively thick thickness so as to lower a resistance value and to enable more current to flow. However, wiring provided in the bottom wiring layer or a wiring layer close to the bottom wiring layer has a relatively thin thickness because there is no problem even though the resistance value is increased. Regarding the bottom wiring layer or a wiring layer close to the bottom wiring layer among the plurality of wiring layers, generally, the minimum width of a wire or the minimum gap between wires, which is defined in the design rule is the smallest.

Thus, as illustrated in Fig. 10, the output signal lines 301 and 302, the drive signal lines 311 and 312, and the control signal line 300 which run in parallel in the direction along the second side Y1 may be provided in the bottom wiring layer (wiring layer closest to the semiconductor substrate 400) or a wiring layer close to the bottom wiring layer, among the plurality of wiring layers. As described above, among the plurality of wiring layers, in the bottom wiring layer and the like which have the thinnest thickness, the control signal line 300 is provided between the drive signal lines 311 and 312, and the output signal lines 301 and 302, and thus it is possible to reduce parasitic capacitance between the adjacent signal lines. Accordingly, it is possible to reduce a load of each of the signal lines and to reduce a delay time of the propagated signal. Thus, it is possible to also improve a reading rate by the image reading chip 415. In addition, the length of the second side Y1 is determined by the number of the pixel units 110. However, the output signal lines 301 and 302, the drive signal lines 311 and 312, and the control signal line 300 which run in parallel in the direction along the second side Y1 are provided in the wiring layer of which the minimum wire width or the minimum gap between wires, which is defined in the design rule is the smallest. Thus, it is possible to reduce the length of the first side X1 and consequently, an effect of reducing a layout area is obtained. Thus, it is possible to reduce the size or cost of the image reading chip 415.

As illustrated in Figs. 9 and 11, in the exemplary embodiment, the drive signal line 311 includes a signal line (an example of a first signal line) 311a and a signal line (an example of a second signal line) 311b. The signal line 311a is electrically connected to the pixel unit 110 and is provided in the direction along the first side X1. The signal line 311b is electrically connected to the signal line 311a and is provided in the direction along the second side Y1. Similarly, the drive signal line 312 includes a signal line (an example of the first signal line) 312a and a signal line (an example of the second signal line) 312b. The signal line 312a is electrically connected to the pixel unit 110 and is provided in the direction along the first side X1. The signal line 312b is electrically connected to the signal line 312a and is provided in the direction along the second side Y1.

The output signal line 301 includes a signal line (an example of a third signal line) 301a and a signal line (an example of a fourth signal line) 301b. The signal line 301a is electrically connected to the pixel unit 110 and is provided in the direction along the first side X1. The signal line 301b is electrically connected to the signal line 301a and is provided in the direction along the second side Y1. Similarly, the output signal line 302 includes a signal line (an example of the third signal line) 302a and a signal line (an example of the fourth signal line) 302b. The signal line 302a is electrically connected to the pixel unit 110 and is provided in the direction along the first side X1. The signal line 302b is electrically connected to the signal line 302a and is provided in the direction along the second side Y1.

The control signal line 300 includes a signal line (an example of a fifth signal line) 300a and a signal line (an example of a sixth signal line) 300b. The signal line 300a is electrically connected to the pixel unit 110 and is provided in the direction along the first side X1. The signal line 300b is electrically connected to the signal line 300a and is provided in the direction along the second side Y1.

The signal line 300a is provided between the signal line 311a and the signal line 301a, and the signal line 300a is also provided between the signal line 312a and the signal line 302a. The signal line 300b is provided between the signal lines 311b and 312b and the signal lines 301b and 302b. That is, in the exemplary embodiment, the signal line 300b which is also used as a shield line is provided between the signal lines 311b and 312b and the signal lines 301b and 302b which run in parallel in the direction along the second side Y1, and the signal line 300a which is used as a shield line is also provided between the signal line 311a and the signal line 301a which run in parallel in the direction along the first side X1 or between the signal line 312a and the signal line 302a which run in parallel in the direction along the first side X1. Thus, it is possible to improve the shield effect by the control signal line 300.

The signal lines 301a, 302a, 300a, 311a, and 312a in the first side X1 direction, and the signal lines 301b, 302b, 300b, 311b, and 312b in the second side Y1 direction intersect with each other, and thus are provided in different wiring layers. The signal line 301a and the signal line 301b are connected to each other through a via, the signal line 302a and the signal line 302b are connected to each other through a via, and the signal line 300a and the signal line 300b are connected to each other through a via. The signal line 311a and the signal line 311b are connected to each other through a via, and the signal line 312a and the signal line 312b are connected to each other through a via. For example, the signal lines 301b, 302b, 300b, 311b, and 312b may be provided in a first wiring layer (wiring layer closest to the semiconductor substrate 400), and the signal lines 301a, 302a, 300a, 311a, and 312a may be provided in a second wiring layer (wiring layer which is the next (to the first wiring layer) closest to the semiconductor substrate 400). If providing as described above is performed, as described above, it is possible to reduce parasitic capacitance between adjacent signal lines. Thus, it is possible to reduce a load of each of the signal lines, and to reduce a delay time of the propagated signal. Thus, it is possible to also improve a reading rate by the image reading chip 415. As described above, it is possible to reduce the width of each of the signal lines and the gap between the signal lines. Accordingly, an effect of reducing a layout area is obtained. Thus, it is possible to reduce the size or cost of the image reading chip 415.

As illustrated in Fig. 11, in the exemplary embodiment, a ground line 320 for grounding the pixel unit 110 is provided in the direction along the second side Y1, so as to overlap a region which is far from the second side Y1 of each of the pixel units 110. Both sides of the output signal line group formed from the output signal lines 301 and 302 are shielded by the ground line 320 and the control signal line 300. That is, in the exemplary embodiment, the ground line 320 for grounding the pixel unit 110 is also used as a shield line. Thus, it is possible to more reduce an influence of noise on a weak image signal without an increase of the layout area.

As illustrated in Figs. 9, 10, and 11, in the exemplary embodiment, a signal line functioning as a shield line may not be provided between the output signal line 301 and the output signal line 302. However, since the pixel signal transferred by the output signal lines 301 and 302 is a weak signal, an influence of the crosstalk is small. In addition, as illustrated in Fig. 8, in the exemplary embodiment, the value (voltage) of the output signal line 302 is not changed (maintains a high level) for a period when the pixel signal output from the odd-numbered pixel unit 110 is transferred by the output signal line 301. The value (voltage) of the output signal line 301 is not changed (maintains a high level) for a period when the pixel signal output from the even-numbered pixel unit 110 is transferred by the output signal line 302. Thus, an influence of the crosstalk is small.

### 5. Advantages

As illustrated above, in the scanner unit (image reading apparatus) 3 of the exemplary embodiment, in the image reading chip 415, the control signal line 300 for transferring the reset signal RST to m pieces of the pixel units 110 is provided between the drive signal line group formed from the drive signal lines 311 and 312, and the output signal line group formed from the output signal lines 301 and 302. The value (voltage) of the reset signal RST is changed before a signal is output from each of m pieces of the pixel units 110, and is not changed in a duration when the value (voltage) of an output signal from each of m pieces of the pixel units 110 is changed. Thus, the reset signal RST may be also used as a shield line. Thus, according to the scanner unit (image reading apparatus) 3 of the exemplary embodiment, since it is not necessary that a dedicated shield line is provided, the occurrence of an increase of the size of an image reading chip 415 or the restriction of a layout by the limited chip size can be small. It is possible to reduce crosstalk between the output signal lines 301 and 302, and the drive signal lines 311 and 312.

In the scanner unit (image reading apparatus) 3 in the exemplary embodiment, in the image reading chip 415, the control signal line 300 which is also used as a shield line is provided between the drive signal lines 311 and 312, and the output signal lines 301 and 302 in both of the direction along the first side X1 of the image reading chip 415, and the direction along the second side Y1. Thus, according to the scanner unit (image reading apparatus) 3 of the exemplary embodiment, in the image reading chip 415, it is possible to perform shielding from an output end of each of m pieces of pixel units 110. Accordingly, it is possible to reduce more the crosstalk between the output signal lines 301 and 302, and the drive signal lines 311 and 312.

According to the scanner unit (image reading apparatus) 3 of the exemplary embodiment, in the image reading chip 415, the signal lines 301b, 302b, 300b, 311b, and 312b which run in parallel in the direction along the second side Y1 are provided in the bottom wiring layer having the thinnest thickness, and thus it is possible to reduce parasitic capacitance between adjacent wires. Thus, it is possible to reduce a load of the output signal lines 301 and 302 or the drive signal lines 311 and 312, and to reduce a delay time of the output signal (pixel signal) or the drive signal which is propagated. It is possible to also improve the reading rate by the image reading chip 415.

According to the scanner unit (image reading apparatus) 3 of the exemplary embodiment, in the image reading chip 415, the signal lines 301b, 302b, 300b, 311b, and 312b which run in parallel in the direction along the second side Y1 are provided in the bottom wiring layer of which the minimum width of a wire or the minimum gap between wires which is defined in the design rule. Thus, it is possible to reduce a disposition region of the output signal lines 301 and 302, the drive signal lines 311 and 312, and the control signal line 300. Thus, an effect of reducing a layout area of the image reading chip 415 is obtained, and it is possible to reduce the size or cost of the image reading chip 415.

According to the scanner unit (image reading apparatus) 3 of the exemplary embodiment, in the image reading chip 415, the drive signal transferred to m pieces of pixel units 110 is divided into the two drive signal lines 311 and 312, and transferred. Thus, it is possible to reduce a load of each of the drive signal lines 311 and 312. Accordingly, it is possible to reduce a time required for an output of the pixel signal from each of m pieces of the pixel units 110.

According to the scanner unit (image reading apparatus) 3 of the exemplary embodiment, in the image reading chip 415, the output signal output from m pieces of the pixel units is divided into the two output signal lines 301 and 302, and thus it is possible to reduce a load of each of the output signal lines 301 and 302. Accordingly, it is possible to improve the transfer rate.

### 6. Modification Example

### Modification Example 1

In the exemplary embodiment, the image reading chip 415 includes the two output signal lines 301 and 302, and the two drive signal lines. However, the number of output signal lines or drive signal lines may be randomly changed. The image reading chip 415 including four output signal lines and four drive signal lines will be described below, as Modification Example 1.

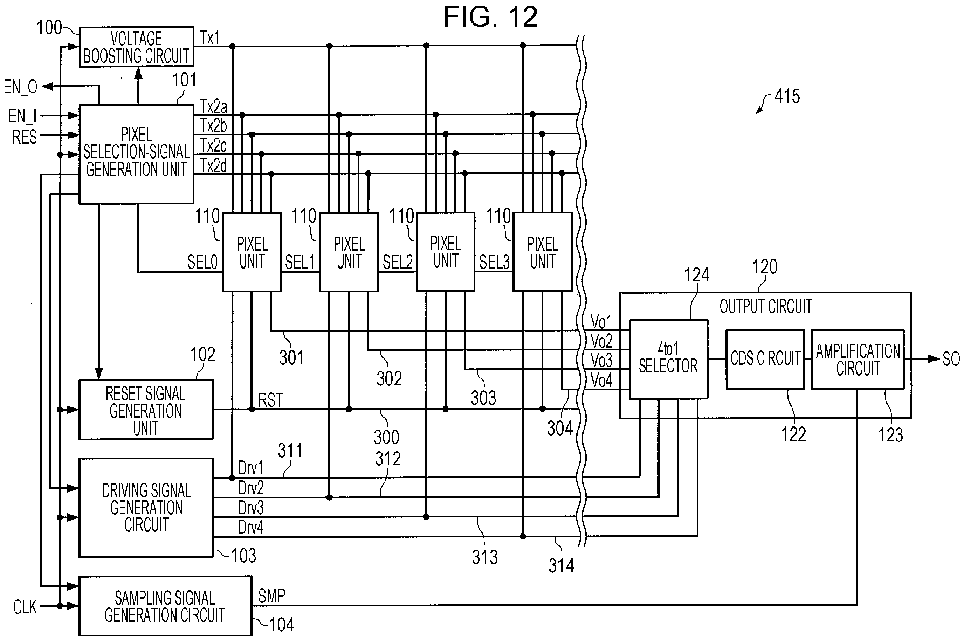

Fig. 12 is a functional block diagram illustrating the image reading chip 415 according to Modification Example 1. In Fig. 12, components similar to those in Fig. 6 are denoted by the same reference signs, and descriptions thereof will be omitted or simplified. Modification Example 1 will be described focused on a difference from the above exemplary embodiment.

In the image reading chip 415 according to Modification Example 1 illustrated in Fig. 12, the drive signal generation circuit 103 generates drive signals Drv1, Drv2, Drv3, and Drv4 for driving n pieces of the pixel units 110, based on the control signal from the pixel selection-signal generation unit 101. The four drive signals Drv1, Drv2, Drv3, and Drv4 exclusively become active (high level in the exemplary embodiment). Any one of the four drive signals Drv1, Drv2, Drv3, and Drv4 is supplied to each of n pieces of the pixel units 110. Thus, when the drive signal Drv1, the drive signal Drv2, the drive signal Drv3, or the drive signal Drv4 which is supplied becomes active (high level), and the pixel selection signal SELi-1 is active (high level), the i-th (i is any of 1 to n) pixel unit 110 causes the pixel selection signal SELi to become active (high level), and outputs an output signal (pixel signal). The pixel selection signal SELi is output to the (i+1)th pixel unit 110.

In Modification Example 1, similar to the exemplary embodiment, n pieces of the pixel units 110 are arranged in a one-dimensional direction. However, in Modification Example 1, when counted from the end, the drive signal Drv1 is supplied to (4m+1)th (m is an integer of 0 or more) pixel unit 110, the drive signal Drv2 is supplied to (4m+2)th pixel unit 110, the drive signal Drv3 is supplied to (4m+3)th pixel unit 110, and the drive signal Drv4 is supplied to (4m+4)th pixel unit 110. Thus, the image reading chip 415 includes a drive signal line group formed from the plurality of drive signal lines 311, 312, 313, and 314. The drive signal Drv1 is transferred to the (4m+1)th pixel unit 110 on the drive signal line 311, the drive signal Drv2 is transferred to the (4m+2)th pixel unit 110 on the drive signal line 312, the drive signal Drv3 is transferred to the (4m+3)th pixel unit 110 on the drive signal line 313, and drive signal Drv4 is transferred to the (4m+4)th pixel unit 110 on the drive signal line 314. In this manner, the drive signals to be supplied to n pieces of the pixel units 110 are distributed into the drive signal lines 311, 312, 313, and 314, and transferred. Thus, it is possible to reduce a load of each of the drive signal lines 311, 312, 313, and 314. Accordingly, it is possible to reduce a time required for an output of the pixel signal from the pixel units 110.

Output signal (pixel signals) output from n pieces of the pixel units 110 are sequentially transferred to the output circuit 120. The image reading chip 415 according to Modification Example 1 includes an output signal line group formed from the plurality of output signal lines 301, 302, 303, and 304 for transferring output signals (pixel signals) which are output from n pieces of the pixel units 110, to the output circuit 120. Output signals (pixel signals) from the (4m+1)th pixel unit 110 are sequentially transferred to the output circuit 120 on the output signal line 301. Output signals (pixel signals) from the (4m+2)th pixel unit 110 are sequentially transferred to the output circuit 120 on the output signal line 302. Output signals (pixel signals) from the (4m+3)th pixel unit 110 are sequentially transferred to the output circuit 120 on the output signal line 303. Output signals (pixel signals) from the (4m+4)th pixel unit 110 are sequentially transferred to the output circuit 120 on the output signal line 304. In this manner, the output signals (pixel signals) from n pieces of the pixel units 110 are distributed to the output signal lines 301, 302, 303, and 304, and are sequentially transferred, and thus it is possible to reduce a load of each of the output signal lines 301, 302, 303 and 304. Accordingly, it is possible to increase a transfer rate.

In Modification Example 1, the output circuit 120 includes a 4to1 selector 124, a CDS circuit 122, and an amplification circuit 123.

An image signal Vo1 which sequentially includes pixel signals output from the (4m+1)th pixel unit 110 is supplied to the 4to1 selector 124 through the output signal line 301. An image signal Vo2 which sequentially includes pixel signals output from the (4m+2)th pixel unit 110 is supplied to the 4to1 selector 124 through the output signal line 302. An image signal Vo3 which sequentially includes pixel signals output from the (4m+3)th pixel unit 110 is supplied to the 4to1 selector 124 through the output signal line 303. An image signal Vo4 which sequentially includes pixel signals output from the (4m+4)th pixel unit 110 is supplied to the 4to1 selector 124 through the output signal line 304. The drive signals Drv1, Drv2, Drv3, and Drv4 are also supplied to the 4to1 selector 124. When the drive signal Drv1 is active (high level), the 4to1 selector 124 selects and outputs the image signal Vo1. When the drive signal Drv2 is active (high level), the 4to1 selector 124 selects and outputs the image signal Vo2. When the drive signal Drv3 is active (high level), the 4to1 selector 124 selects and outputs the image signal Vo3. When the drive signal Drv4 is active (high level), the 4to1 selector 124 selects and outputs the image signal Vo4.

An output signal (image signal Vo1, image signal Vo2, image signal Vo3, or image signal Vo4) of the 4to1 selector 124 is input to the CDS circuit 122. The CDS circuit 122 performs correlated double sampling so as to remove noise which occurs by characteristic variation of the amplification transistors included in n pieces of the pixel units 110, and is superimposed on the image signals Vo1, Vo2, Vo3, and Vo4.

The amplification circuit 123 performs sampling on a signal having noise removed by the CDS circuit 122, based on a sampling signal SMP. The amplification circuit 123 amplifies the signal subjected to sampling, so as to generate an image signal SO. As described above, the image signal SO is output from the image reading chip 415 and is supplied to the analog front end (AFE) 202 (see Fig. 5).

The configuration of the pixel unit 110 is similar to the illustration of Fig. 7, and thus illustrations and descriptions thereof will be omitted.

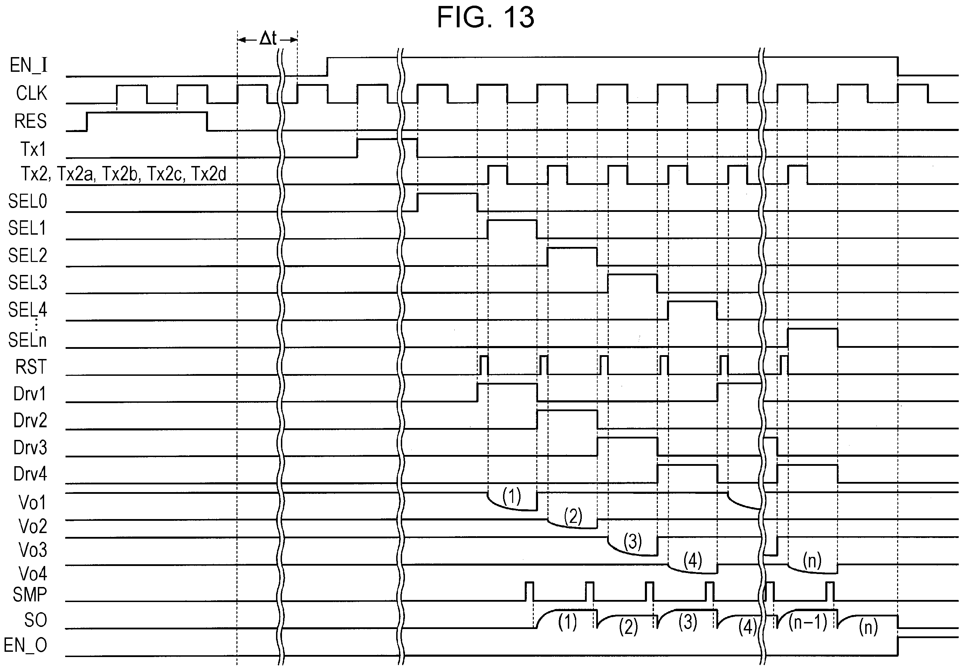

Fig. 13 is a timing chart of signals of the image reading chip 415 according to Modification Example 1. Fig. 13 is a timing chart in a case where a resolution when the scanner unit (image reading apparatus) 3 reads an image is set to 300 dpi.

As illustrated in Fig. 13, firstly, the resolution setting signal RES becomes a high level for two cycles of the clock signal CLK. If the exposure time Δt elapses, the chip enable signal EN_I becomes active (high level) for a predetermined period, and then various signals at 300 dpi are supplied to each of the pixel units 110.

After the chip enable signal EN_I becomes active (high level), firstly, the first transfer control signal Tx1 becomes active (high level) for one cycle of the clock signal CLK.

Then, the pixel selection signal SEL0 becomes active (high level) for one cycle of the clock signal CLK.

Then, for one cycle of the clock signal CLK, the drive signal Drv1 becomes active (high level), and the first transfer control signal Tx1 and the pixel selection signal SEL0 become inactive (low level). The reset signal RST which is delayed a little becomes active (high level) for a short time.

Then, after the reset signal RST returns to being inactive (low level), all of the four signals Tx2a, Tx2b, Tx2c, and Tx2d constituting the second transfer control signal Tx2 become active (high level) until the clock signal CLK falls for the next time. The pixel selection signal SEL1 becomes active (high level). Thus, a pixel signal from the first pixel unit 110 is output to the output signal line 301, and the image signal Vo1 has a voltage depending on this pixel signal. The image signal Vo1 is subjected to signal processing in the output circuit 120. The image signal SO has a voltage corresponding to the first pixel signal, with synchronization with falling of the sampling signal SMP.

Then, for one cycle of the clock signal CLK, the drive signal Drv2 becomes active (high level), and the pixel selection signal SEL1 and the drive signal Drv1 become inactive (low level) together. The reset signal RST which is delayed a little becomes active (high level) for a short time.

Then, after the reset signal RST returns to being inactive (low level), all of the four signals Tx2a, Tx2b, Tx2c, and Tx2d become active (high level) until the clock signal CLK falls for the next time. The pixel selection signal SEL2 becomes active (high level). Thus, a pixel signal from the second pixel unit 110 is output to the output signal line 302, and the image signal Vo2 has a voltage depending on this pixel signal. The image signal Vo2 is subjected to signal processing in the output circuit 120. The image signal SO has a voltage corresponding to the second pixel signal, with synchronization with falling of the sampling signal SMP.

Then, for one cycle of the clock signal CLK, the drive signal Drv3 becomes active (high level), and the pixel selection signal SEL2 and the drive signal Drv2 become inactive (low level) together. The reset signal RST which is delayed a little becomes active (high level) for a short time.

Then, after the reset signal RST returns to being inactive (low level), all of the four signals Tx2a, Tx2b, Tx2c, and Tx2d become active (high level) until the clock signal CLK falls for the next time. The pixel selection signal SEL3 becomes active (high level). Thus, a pixel signal from the third pixel unit 110 is output to the output signal line 303, and the image signal Vo3 has a voltage depending on the pixel signal. The image signal Vo3 is subjected to signal processing in the output circuit 120. The image signal SO has a voltage depending on the third pixel signal with synchronization with falling of the sampling signal SMP.

Then, for one cycle of the clock signal CLK, the drive signal Drv4 becomes active (high level), and the pixel selection signal SEL3 and the drive signal Drv3 become inactive (low level). The reset signal RST which is delayed a little becomes active (high level) for a short time.

Then, after the reset signal RST returns to being inactive (low level), all of the four signals Tx2a, Tx2b, Tx2c, and Tx2d become active (high level) until the clock signal CLK falls for the next time. The pixel selection signal SEL4 becomes active (high level). Thus, a pixel signal from the fourth pixel unit 110 is output to the output signal line 304, and the image signal Vo4 has a voltage depending on the pixel signal. The image signal Vo4 is subjected to signal processing in the output circuit 120. The image signal SO has a voltage corresponding to the fourth pixel signal, with synchronization with falling of the sampling signal SMP.

Then, for one cycle of the clock signal CLK, the drive signal Drv1 becomes active (high level), and the pixel selection signal SEL4 and the drive signal Drv4 become inactive (low level).

In the following descriptions, similarly, the image signal SO has a voltage depending on pixel signals of the fifth to n-th pixel units, with synchronization with falling of the sampling signal SMP.

After that, the chip enable signal EN_I is changed from being active (high level) to being inactive (low level), and the output terminal for the image signal SO has high impedance. The chip enable signal EN_O becomes active (high level) for a predetermined period.

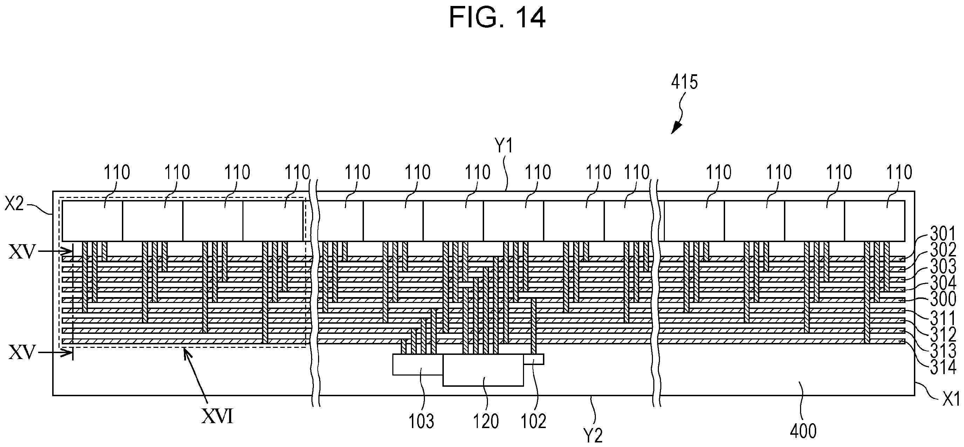

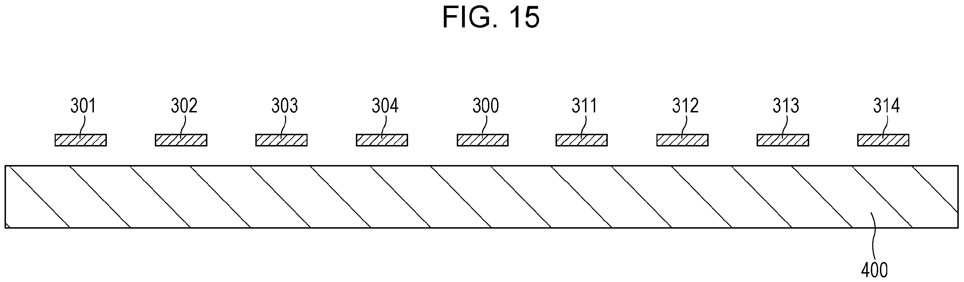

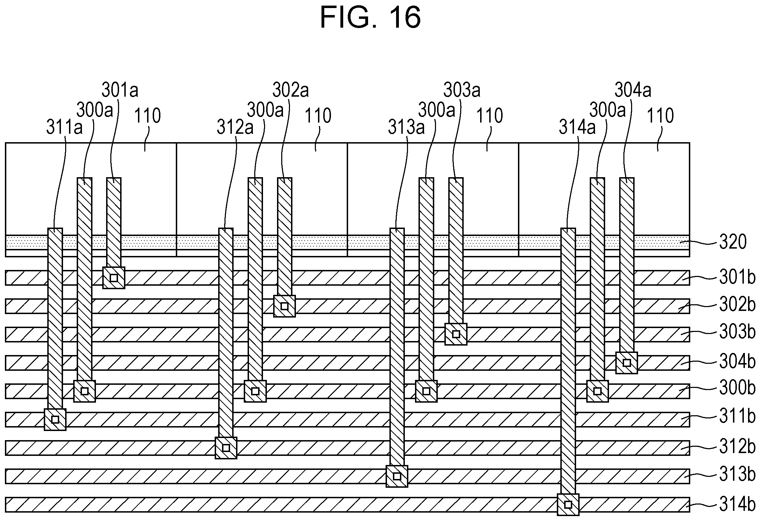

Fig. 14 is a diagram illustrating a layout configuration of the image reading chip 415 according to Modification Example 1. Fig. 14 illustrates a layout configuration when the semiconductor substrate 400 of the image reading chip 415 is viewed in plan. Fig. 14 illustrates some of circuit blocks or signal lines constituting the image reading chip 415. Fig. 15 is a sectional view of the image reading chip 415 taken along line XV-XV in Fig. 14. Fig. 16 is an enlarged view of a region XVI indicated by a broken line in Fig. 14. In descriptions for Figs. 14 to 16, descriptions repeated in Figs. 9 to 11 will be omitted or simplified.

As illustrated in Fig. 14, in Modification Example 1, because of reasons similar to those in the exemplary embodiment, the output signal lines 301, 302, 303, and 304 for sequentially transferring output signals (pixel signals) from the pixel units 110, and the drive signal lines 311, 312, 313, and 314 for transferring the drive signals Drv1, Drv2, Drv3, and Drv4 for driving the pixel units 110 are also commonly long and run in parallel. In Fig. 14, the output signal line 301, the output signal line 302, the output signal line 303, the output signal line 304, the drive signal line 311, the drive signal line 312, the drive signal line 313, and the drive signal line 314 are disposed in an order from being close to m pieces of pixel units 110, so as to run in parallel.

In Modification Example 1, the control signal line 300 for transferring the reset signal RST is provided between the output signal line 304 and the drive signal line 311, that is, between the drive signal line group formed from the drive signal lines 311, 312, 313, and 314, and the output signal line group formed from the output signal lines 301, 302, 303, and 304, in order to reduce the crosstalk between the output signal lines 301, 302, 303, and 304, and the drive signal lines 311, 312, 313, and 314.

As illustrated in Fig. 15, in Modification Example 1, all of the output signal lines 301, 302, 303, and 304, and the drive signal lines 311, 312, 313, and 314 which run in parallel to the direction along the second side Y1 are provided in the same wiring layer. The control signal line 300 which runs in parallel to these signal lines is also provided in the same wiring layer. Thus, a shield effect is improved by the control signal line 300.

As illustrated in Fig. 15, all of the output signal lines 301, 302, 303, and 304, the drive signal lines 311, 312, 313, and 314, and the control signal line 300 which run in parallel to the direction along the second side Y1 may be provided in the bottom wiring layer (wiring layer closest to the semiconductor substrate 400) or a wiring layer close to the bottom wiring layer, among the plurality of wiring layers. As described above, among the plurality of wiring layers, in the bottom wiring layer and the like which have the thinnest thickness, the control signal line 300 is provided between the drive signal lines 311, 312, 313, and 314, and the output signal lines 301, 302, 303, and 304, and thus it is possible to reduce parasitic capacitance between the adjacent signal lines. Accordingly, it is possible to reduce a load of each of the signal lines and to reduce a delay time of the propagated signal. Thus, it is possible to also improve a reading rate by the image reading chip 415. In addition, the length of the second side Y1 is determined by the number of the pixel units 110. However, the output signal lines 301, 302, 303, and 304, the drive signal lines 311, 312, 313, and 314, and the control signal line 300 which run in parallel in the direction along the second side Y1 are provided in the wiring layer of which the minimum wire width or the minimum gap between wires, which is defined in the design rule is the smallest. Thus, it is possible to reduce the length of the first side X1 and consequently, an effect of reducing a layout area is obtained. Thus, it is possible to reduce the size or cost of the image reading chip 415.

As illustrated in Figs. 14 and 16, in Modification Example 1, the drive signal line 311 includes the signal line 311a (an example of the first signal line) which is electrically connected to the pixel unit 110 and is provided in the direction along the first side X1, and the signal line 311b (an example of the second signal line) which is electrically connected to the signal line 311a and is provided in the direction along the second side Y1. Similarly, the drive signal line 312 includes the signal line 312a (an example of the first signal line) which is electrically connected to the pixel unit 110 and is provided in the direction along the first side X1, and the signal line 312b (an example of the second signal line) which is electrically connected to the signal line 312a and is provided in the direction along the second side Y1. Similarly, the drive signal line 313 includes the signal line 313a (an example of the first signal line) which is electrically connected to the pixel unit 110 and is provided in the direction along the first side X1, and the signal line 313b (an example of the second signal line) which is electrically connected to the signal line 313a and is provided in the direction along the second side Y1. Similarly, the drive signal line 314 includes the signal line 314a (an example of the first signal line) which is electrically connected to the pixel unit 110 and is provided in the direction along the first side X1, and the signal line 314b (an example of the second signal line) which is electrically connected to the signal line 314a and is provided in the direction along the second side Y1.

The output signal line 301 includes a signal line (an example of a third signal line) 301a and a signal line (an example of a fourth signal line) 301b. The signal line 301a is electrically connected to the pixel unit 110 and is provided in the direction along the first side X1. The signal line 301b is electrically connected to the signal line 301a and is provided in the direction along the second side Y1. Similarly, the output signal line 302 includes a signal line (an example of the third signal line) 302a and a signal line (an example of the fourth signal line) 302b. The signal line 302a is electrically connected to the pixel unit 110 and is provided in the direction along the first side X1. The signal line 302b is electrically connected to the signal line 302a and is provided in the direction along the second side Y1. Similarly, the output signal line 303 includes a signal line (an example of the third signal line) 303a and a signal line (an example of the fourth signal line) 303b. The signal line 303a is electrically connected to the pixel unit 110 and is provided in the direction along the first side X1. The signal line 303b is electrically connected to the signal line 303a and is provided in the direction along the second side Y1. Similarly, the output signal line 304 includes a signal line (an example of the third signal line) 304a and a signal line (an example of the fourth signal line) 304b. The signal line 304a is electrically connected to the pixel unit 110 and is provided in the direction along the first side X1. The signal line 304b is electrically connected to the signal line 304a and is provided in the direction along the second side Y1.

The control signal line 300 includes a signal line (an example of a fifth signal line) 300a and a signal line (an example of a sixth signal line) 300b. The signal line 300a is electrically connected to the pixel unit 110 and is provided in the direction along the first side X1. The signal line 300b is electrically connected to the signal line 300a and is provided in the direction along the second side Y1.

The signal line 300a is provided between the signal line 311a and the signal line 301a. The signal line 300a is also provided between the signal line 312a and the signal line 302a. The signal line 300a is also provided between the signal line 313a and the signal line 303a. The signal line 300a is also provided between the signal line 314a and the signal line 304a. The signal line 300b is provided between the signal lines 311b, 312b, 313b, and 314b, and the signal lines 301b, 302b, 303b, and 304b. That is, in Modification Example 1, the signal line 300b which is also used as a shield line is provided between the signal lines 311b, 312b, 313b, and 314b and the signal lines 301b, 302b, 303b, and 304b which run in parallel in the direction along the second side Y1, and the signal line 300a which is used as a shield line is also provided between the signal line 311a and the signal line 301a, between the signal line 312a and the signal line 302a, between the signal line 313a and the signal line 303a, and between the signal line 314a and the signal line 304a, which run in parallel in the direction along the first side X1. Thus, it is possible to improve the shield effect by the control signal line 300.

The signal lines 301a, 302a, 303a, 304a, 300a, 311a, 312a, 313a, and 314a in the first side X1 direction, and the signal lines 301b, 302b, 303b, 304b, 300b, 311b, 312b, 313b, and 314b in the second side Y1 direction are provided in different wiring layers, in order to intersect with each other. The signal line 301a and the signal line 301b are connected to each other through a via, and the signal line 302a and the signal line 302b are connected to each other through a via. The signal line 303a and the signal line 303b are connected to each other through a via, and the signal line 304a and the signal line 304b are connected to each other through a via. The signal line 300a and the signal line 300b are connected to each other through a via. The signal line 311a and the signal line 311b are connected to each other through a via, and the signal line 312a and the signal line 312b are connected to each other through a via. The signal line 313a and the signal line 313b are connected to each other through a via, and the signal line 314a and the signal line 314b are connected to each other through a via. For example, the signal lines 301b, 302b, 303b, 304b, 300b, 311b, 312b, 313b, and 314b may be provided in the first wiring layer (wiring layer closest to the semiconductor substrate 400), and the signal lines 301a, 302a, 303a, 304a, 300a, 311a, 312a, 313a, and 314a may be provided in the second wiring layer (wiring layer which is the next (to the first wiring layer) closest to the semiconductor substrate 400). If providing as described above is performed, it is possible to reduce parasitic capacitance between adjacent signal lines. Thus, it is possible to reduce a load of each of the signal lines, and to reduce a delay time of the propagated signal. Thus, it is possible to also improve a reading rate by the image reading chip 415. Further, it is possible to reduce the width of each of the signal lines and the gap between the signal lines. Accordingly, an effect of reducing a layout area is obtained. Thus, it is possible to reduce the size or cost of the image reading chip 415.

As illustrated in Fig. 16, in Modification Example 1, the ground line 320 for grounding the pixel unit 110 is also provided in the direction along the second side Y1, so as to overlap a region which is far from the second side Y1 of each of the pixel units 110. Both sides of the output signal line group formed from the output signal lines 301, 302, 303, and 304 are also shielded by the ground line 320 and the control signal line 300. That is, in Modification Example 1, similar to the exemplary embodiment, the ground line 320 for grounding the pixel unit 110 is also used as a shield line, too. Thus, it is possible to further reduce an influence of noise on a weak image signal without an increase of the layout area.

### Modification Example 2

An image reading chip 415 which includes one output signal line and one drive signal line will be described as Modification Example 2.

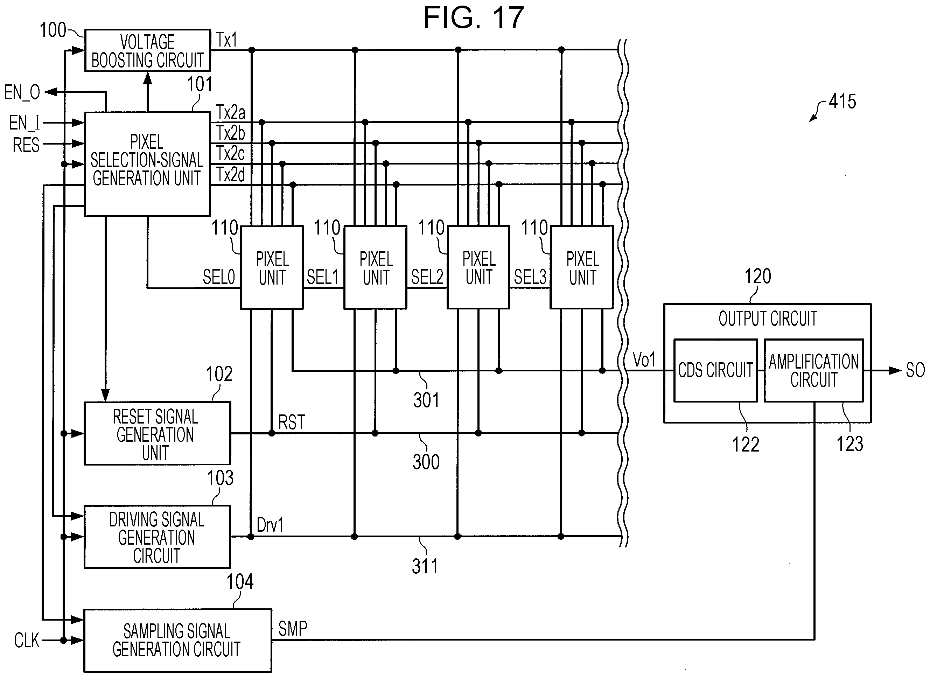

Fig. 17 is a functional block diagram of the image reading chip 415 according to Modification Example 2. In Fig. 17, components similar to those in Fig. 6 are denoted by the same reference signs, and descriptions thereof will be omitted or simplified. Modification Example 2 will be described focused on a difference from the above exemplary embodiment.

In the image reading chip 415 according to Modification Example 2 illustrated in Fig. 17, the drive signal generation circuit 103 generates a drive signal Drv1 for driving n pieces of the pixel units 110, based on a control signal from the pixel selection-signal generation unit 101. One drive signal Drv1 is supplied to each of n pieces of the pixel units 110. Thus, when the drive signal Drv1 becomes active (high level), and the pixel selection signal SELi-1 is active (high level), the i-th (i is any of 1 to n) pixel unit 110 causes the pixel selection signal SELi to become active (high level), and outputs an output signal (pixel signal). The pixel selection signal SELi is output to the (i+1)th pixel unit 110.

In Modification Example 2, similar to the exemplary embodiment, n pieces of the pixel units 110 are also arranged in a one-dimensional direction. However, in Modification Example 2, the drive signal Drv1 is supplied to all of the pixel units 110. Thus, the image reading chip 415 includes one drive signal line 311, and the drive signal Drv1 is transferred to all of the pixel units 110 on the drive signal line 311.

Output signal (pixel signals) output from n pieces of the pixel units 110 are sequentially transferred to the output circuit 120. The image reading chip 415 in Modification Example 2 includes one output signal line 301 for transferring output signals (pixel signals) output from n pieces of the pixel units 110, to the output circuit 120. The output signals (pixel signals) output from all of the pixel units 110 are sequentially transferred to the output circuit 120 on the output signal line 301.

In Modification Example 2, the output circuit 120 includes the CDS circuit 122 and the amplification circuit 123. In Modification Example 2, since the one output signal line is provided, the 2to1 selector 121 which is required in the exemplary embodiment is unnecessary.

The image signal Vo1 which sequentially includes pixel signals output from n pieces of the pixel units 110 is input to the CDS circuit 122 through the output signal line 301. The CDS circuit 122 performs correlated double sampling so as to remove noise which occurs by characteristic variation of the amplification transistors provided in n pieces of the pixel units 110, and is superimposed on the image signal Vo1.

The amplification circuit 123 performs sampling on a signal having noise removed by the CDS circuit 122, based on a sampling signal SMP. The amplification circuit 123 amplifies the signal subjected to sampling, so as to generate an image signal SO. As described above, the image signal SO is output from the image reading chip 415 and is supplied to the analog front end (AFE) 202 (see Fig. 5).

The configuration of the pixel unit 110 is similar to the illustration of Fig. 7, and thus illustrations and descriptions thereof will be omitted.

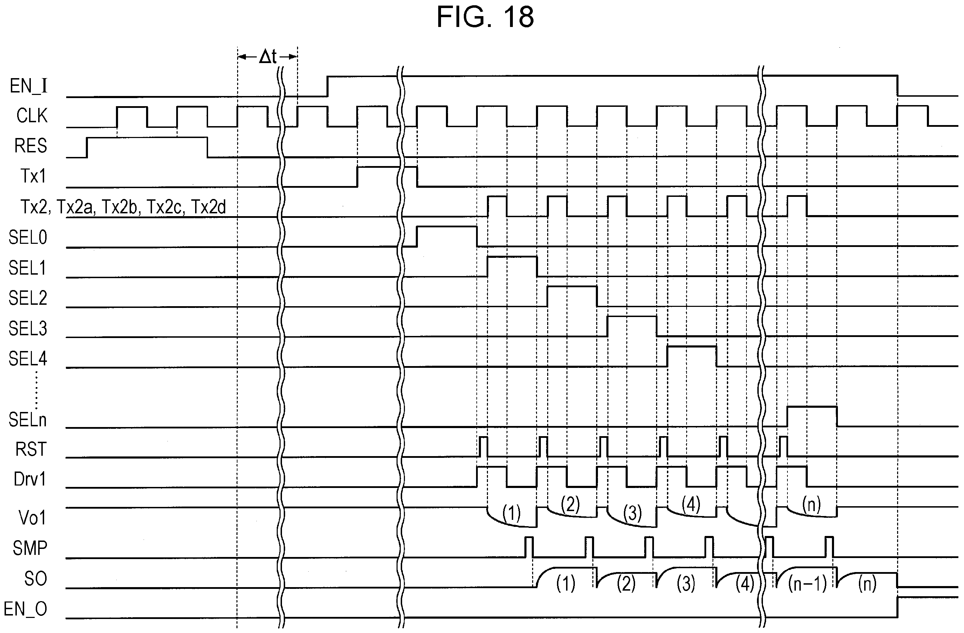

Fig. 18 is a timing chart of signals of the image reading chip 415 according to Modification Example 2. Fig. 18 is a timing chart in a case where the resolution at which the scanner unit (image reading apparatus) 3 reads an image is set to 300 dpi.

As illustrated in Fig. 18, firstly, the resolution setting signal RES becomes a high level for two cycles of the clock signal CLK. If the exposure time Δt elapses, the chip enable signal EN_I becomes active (high level) for a predetermined period, and then various signals at 300 dpi are supplied to each of the pixel units 110.

After the chip enable signal EN_I becomes active (high level), firstly, the first transfer control signal Tx1 becomes active (high level) for one cycle of the clock signal CLK.

Then, the pixel selection signal SEL0 becomes active (high level) for one cycle of the clock signal CLK.

Then, the drive signal Drv1 becomes active (high level) and the first transfer control signal Tx1 and the pixel selection signal SEL0 become inactive (low level), for a half cycle of the clock signal CLK. The reset signal RST which is delayed a little becomes active (high level) for a short time.

Then, after the reset signal RST returns to being inactive (low level), all of the four signals Tx2a, Tx2b, Tx2c, and Tx2d constituting the second transfer control signal Tx2 become active (high level) until the clock signal CLK falls for the next time. The pixel selection signal SEL1 becomes active (high level). Thus, a pixel signal from the first pixel unit 110 is output to the output signal line 301, and the image signal Vo1 has a voltage depending on this pixel signal. The image signal Vo1 is subjected to signal processing in the output circuit 120. The image signal SO has a voltage corresponding to the first pixel signal, with synchronization with falling of the sampling signal SMP.

Then, the drive signal Drv1 becomes active (high level) and the pixel selection signal SEL1 become inactive (low level), for a half cycle of the clock signal CLK. The reset signal RST which is delayed a little becomes active (high level) for a short time.

Then, after the reset signal RST returns to being inactive (low level), all of the four signals Tx2a, Tx2b, Tx2c, and Tx2d become active (high level) until the clock signal CLK falls for the next time. The pixel selection signal SEL2 becomes active (high level). Thus, the pixel signal from the second pixel unit 110 is output to the output signal line 301, and the image signal Vo1 has a voltage depending on the pixel signal. The image signal Vo1 is subjected to signal processing in the output circuit 120. The image signal SO has a voltage corresponding to the second pixel signal, with synchronization with falling of the sampling signal SMP.

Then, the drive signal Drv1 becomes active (high level), and the pixel selection signal SEL2 become inactive (low level), for a half cycle of the clock signal CLK. The reset signal RST which is delayed a little becomes active (high level) for a short time.

In the following descriptions, similarly, the image signal SO has a voltage depending on pixel signals of the third to n-th pixel units, with synchronization with falling of the sampling signal SMP.

After that, the chip enable signal EN_I is changed from being active (high level) to being inactive (low level), and the output terminal for the image signal SO has high impedance. The chip enable signal EN_O becomes active (high level) for a predetermined period.

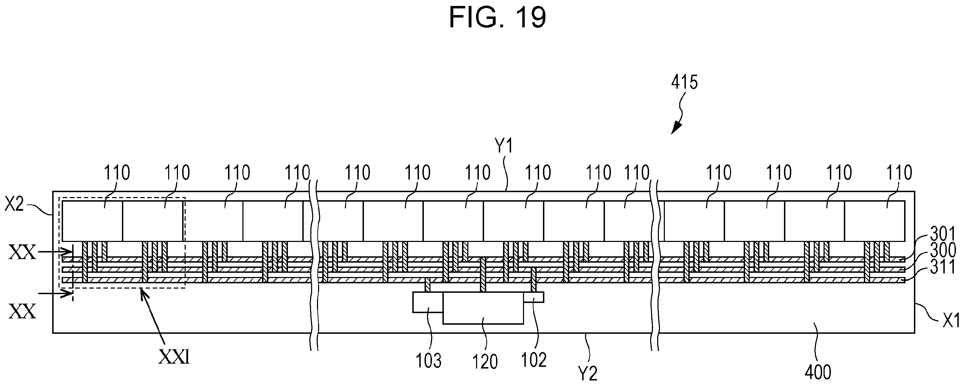

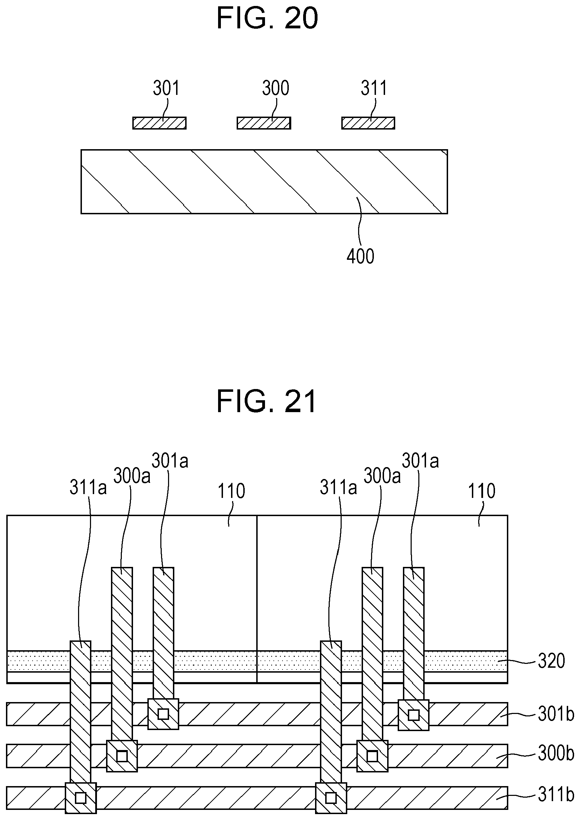

Fig. 19 is a diagram illustrating a layout configuration of the image reading chip 415 according to Modification Example 2. Fig. 19 illustrates a layout configuration when the semiconductor substrate 400 of the image reading chip 415 is viewed in plan. Fig. 19 illustrates some of circuit blocks or signal lines constituting the image reading chip 415. Fig. 20 is a sectional view of the image reading chip 415 taken along line XX-XX in Fig. 19. Fig. 21 is an enlarged view of the region XXI indicated by a broken line in Fig. 19. In descriptions for Figs. 19 to 21, descriptions repeated in Figs. 9 to 11 will be omitted or simplified.

As illustrated in Fig. 19, in Modification Example 2, because of reasons similar to those in the exemplary embodiments, the output signal line 301 for sequentially transferring output signals (pixel signals) from the pixel units 110, and the drive signal line 311 for transferring the drive signal Drv1 for driving the pixel units 110 are also commonly long and run in parallel. In Fig. 19, the output signal line 301 and the drive signal line 311 are disposed in an order from being close to m pieces of pixel units 110, so as to run in parallel.

In Modification Example 2, the control signal line 300 for transferring the reset signal RST is provided between the output signal line 301 and the drive signal line 311, in order to reduce the crosstalk between the output signal line 301 and the drive signal line 311.

As illustrated in Fig. 20, in Modification Example 2, the output signal line 301 and the drive signal line 311 which run in parallel in the direction along the second side Y1 is provided in the same wiring layer. The control signal line 300 which runs in parallel to these signal lines is provided in the same wiring layer. Thus, a shield effect is improved by the control signal line 300.

As illustrated in Fig. 20, the output signal line 301, the drive signal line 311, and the control signal line 300 which run in parallel in the direction along the second side Y1 may be provided in the bottom wiring layer (wiring layer closest to the semiconductor substrate 400) or a wiring layer close to the bottom wiring layer, among the plurality of wiring layers. As described above, among the plurality of wiring layers, in the bottom wiring layer and the like which have the thinnest thickness, the control signal line 300 is provided between the drive signal line 311 and the output signal line 301, and thus it is possible to reduce parasitic capacitance between the adjacent signal lines. Accordingly, it is possible to reduce a load of each of the signal lines and to reduce a delay time of the propagated signal. Thus, it is possible to also improve a reading rate by the image reading chip 415. The length of the second side Y1 is determined by the number of the pixel units 110. However, the output signal line 301, the drive signal line 311, and the control signal line 300 which run in parallel in the direction along the second side Y1 are provided in the wiring layer of which the minimum wire width or the minimum gap between wires, which is defined in the design rule is the smallest. Thus, it is possible to reduce the length of the first side X1 and consequently, an effect of reducing a layout area is obtained. Thus, it is possible to reduce the size or cost of the image reading chip 415.

As illustrated in Figs. 19 and 21, in Modification Example 2, the drive signal line 311 includes the signal line 311a (an example of the first signal line) which is electrically connected to the pixel unit 110 and is provided in the direction along the first side X1, and the signal line 311b (an example of the second signal line) which is electrically connected to the signal line 311a and is provided in the direction along the second side Y1.

The output signal line 301 includes a signal line (an example of a third signal line) 301a and a signal line (an example of a fourth signal line) 301b. The signal line 301a is electrically connected to the pixel unit 110 and is provided in the direction along the first side X1. The signal line 301b is electrically connected to the signal line 301a and is provided in the direction along the second side Y1.

The control signal line 300 includes a signal line (an example of a fifth signal line) 300a and a signal line (an example of a sixth signal line) 300b. The signal line 300a is electrically connected to the pixel unit 110 and is provided in the direction along the first side X1. The signal line 300b is electrically connected to the signal line 300a and is provided in the direction along the second side Y1.

The signal line 300a is provided between the signal line 311a and the signal line 301a. The signal line 300b is provided between the signal line 311b and the signal line 301b. That is, in Modification Example 2, the signal line 300b which is also used as a shield line is provided between the signal line 311b and the signal line 301b which run in parallel to the direction along the second side Y1, and the signal line 300a which is also used as a shield line is also provided between the signal line 311a and the signal line 301a which run in parallel to the direction along the first side X1. Thus, it is possible to improve the shield effect by the control signal line 300.

The signal lines 301a, 300a, and 311a in the first side X1 direction, and the signal lines 301b, 300b, and 311b in the second side Y1 direction are provided in different wiring layers, in order to intersect with each other. The signal line 301a and the signal line 301b are connected to each other through a via, the signal line 300a and the signal line 300b are connected to each other through a via, and the signal line 311a and the signal line 311b are connected to each other through a via. For example, the signal lines 301b, 300b, and 311b may be provided in the first wiring layer (wiring layer closest to the semiconductor substrate 400), and the signal lines 301a, 300a, and 311a may be provided in the second wiring layer (wiring layer which is the next (to the first wiring layer) closest to the semiconductor substrate 400). If providing as described above is performed, it is possible to reduce parasitic capacitance between adjacent signal lines. Thus, it is possible to reduce a load of each of the signal lines, and to reduce a delay time of the propagated signal. Thus, it is possible to also improve a reading rate by the image reading chip 415. Further, it is possible to reduce the width of each of the signal lines and the gap between the signal lines. Accordingly, an effect of reducing a layout area is obtained. Thus, it is possible to reduce the size or cost of the image reading chip 415.

As illustrated in Fig. 21, in Modification Example 2, the ground line 320 for grounding the pixel unit 110 is also provided in the direction along the second side Y1, so as to overlap a region which is far from the second side Y1 of each of the pixel units 110. Both sides of the output signal line 301 are also shielded by the ground line 320 and the control signal line 300. That is, in Modification Example 2, similar to the exemplary embodiment, the ground line 320 for grounding the pixel unit 110 is also used as a shield line, too. Thus, it is possible to further reduce an influence of noise on a weak image signal without an increase of the layout area.

According to the image reading chip of Modification Example 2, since the output signal line 302 and the drive signal line 312 are not provided, it is possible to reduce the first side X1 more than that in the exemplary embodiment, and it is possible to reduce the chip size more.

### Modification Example 3

In the modification examples and the exemplary embodiment, the control signal line 300 for transferring the reset signal RST is provided as a shield line, between the output signal line and the drive signal line. A control signal line for transferring the control signal other than the reset signal RST may be provided.

For example, the resolution setting signal RES is a control signal for controlling the resolution of an image read by the image reading chip 415. Thus, a value (voltage) is changed ahead of reading the image, but the value (voltage) is not changed in the process of reading an image (see Figs. 8, 13, and 18). Thus, the control signal line for transferring the resolution setting signal RES can be also used as a shield line, and one or both of control signal lines may be provided between the output signal line and the drive signal line.

For example, the ground line or a power source line may be provided as a shield line between the output signal line and the drive signal line.

Hitherto, the exemplary embodiment or the modification examples are described. However, the invention is not limited to the exemplary embodiment or the modification examples, and may be implemented in various forms without departing from the scope of the invention as defined by the appended claims. For example, the exemplary embodiment and the modification examples may be appropriately combined.

The invention includes substantially the same configuration (for example, configuration having the same function, the same method, and the same result, or configuration having the same purpose and the same effect) as the configuration described in the exemplary embodiment. The invention includes a configuration obtained by substituting portions which are not essential in the configuration described in the exemplary embodiment. The invention includes a configuration which can have the same advantage as that of the configuration described in the exemplary embodiment, and may achieve the same purpose as that of the configuration. The invention includes a configuration obtained by adding a known technology to the configuration described in the exemplary embodiment.

## Claims

1. An image reading apparatus (3) comprising:
an image reading chip (415) which is configured to read an image
wherein
the image reading chip includes
a pixel unit (110) which includes a light receiving element (PD1-PD4) that receives light from the image so as to perform photoelectric conversion,
a drive signal line (311) for transferring a drive signal for driving the pixel unit, an output signal line (301) for transferring an output signal output from the pixel unit, and
a control signal line (300) for transferring a control signal of which a value is changed for a duration different from a duration when a value of the output signal is changed,
and
the control signal line is provided between the drive signal line and the output signal line.

2. The image reading apparatus according to claim 1, wherein
the control signal is a signal for initializing charges accumulated in the pixel unit.

3. The image reading apparatus according to claim 2, wherein
the image reading chip has a form of including a first side (XI) and a second side (Y1) which is longer than the first side,
the drive signal line includes a first signal line (311a) which is electrically connected to the pixel unit (110) and provided in a direction along the first side, and a second signal line (311b) which is electrically connected to the first signal line and is provided in a direction along the second side,
the output signal line includes a third signal line (301a) which is electrically connected to the pixel unit and is provided in the direction along the first side, and a fourth signal line (301b) which is electrically connected to the third signal line and is provided in the direction along the second side,
the control signal line includes a fifth signal line (300a) which is electrically connected to the pixel unit and is provided in a direction along the first side, and a sixth signal line (300b) which is electrically connected to the fifth signal line and is provided in the direction along the second side,
the fifth signal line is provided between the first signal line and the third signal line, and the sixth signal line is provided between the second signal line and the fourth signal line.

4. The image reading apparatus according to claim 1, wherein
the image reading chip includes a plurality of pixel units (110) which are arranged in a one-dimensional direction, and
the control signal is a signal for controlling a resolution of the image read by the image reading chip.

5. The image reading apparatus according to any one of the preceding claims, wherein the control signal line (300) is provided between the drive signal line (311) and the output signal line (301) in the bottom wiring layer.

6. The image reading apparatus according to any one of the preceding claims, wherein the image reading chip includes a drive signal line group formed from a plurality of drive signal lines (311, 312, 313), and an output signal line group formed from a plurality of output signal lines (301, 302, 303), and
the control signal line (300) is provided between the drive signal line group and the output signal line group.

7. A semiconductor device comprising:
a pixel unit (110) which includes a light receiving element (PD1-PD4) that receives light so as to perform photoelectric conversion;
a drive signal line (311) for transferring a drive signal for driving the pixel unit;
an output signal line (301) for transferring an output signal output from the pixel unit;
and
a control signal line (300) for transferring a control signal of which a value is changed for a duration which is different from a duration when a value of the output signal is changed,
wherein
the control signal line is provided between the drive signal line and the output signal line.
